# EUROPEAN PATENT SPECIFICATION

(11) **EP 0 377 923 B1**
(45) Date of publication and mention of the grant of the patent: **01.12.1993**
(21) Application number: 89300158.6
(22) Date of filing: 09.01.1989
(51) Int. Cl.: A01G 9/10

(54) **Porous artificial soil for plant culture and method of manufacturing the same**
Poröse künstliche Erde für die Pflanzenkultur und Verfahren zu deren Herstellung
Sol artificiel poreux pour la culture de plantes et procédé pour sa fabrication

(43) Date of publication of application: 18.07.1990
(73) Proprietor: SEKISUI KASEIHIN KOGYO KABUSHIKI KAISHA, Nara-shi Nara 630 (JP)
(72) Inventor: Saburi, Takeshi, Nara (JP); Tanigawa, Hiromi, Nara (JP); Ishibashi, Masatoshi, Nara (JP)
(74) Representative: Whalley, Kevin

(56) References cited:
- EP-A- 0 089 796
- DE-A- 3 627 236
- US-A- 3 805 531
- US-A- 4 114 316
- US-A- 4 175 355
- US-A- 4 329 436

## Description

The present invention relates to porous artificial soil for plant culture and its manufacturing method, and more particularly to porous artificial soil for plant culture suitable for agriculture, gardening and the like, and to an economical and safe method of manufacturing such soil.

It is known that the soil conditions for plant culture are very important. More specifically, the soil for plant culture is required to be excellent in water retention, water permeability, air permeability and the like, as well as to have a small root spreading resistance. Such soil is further required to contain moderate nutritious substance and to have good plant supporting and holding properties. To meet such requirements, the soil is generally improved by combining
(i) natural soils including (a) soils such as red clay, black soil, Kanuma soil, leaf mold and the like, and (b) natural sands such as Kiryu sand, pumice, Fuji sand and the like, and
(ii) artificial soils such as vermiculite, pearlite and the like obtained by calcining and expanding a raw ore of the mica type.

However, either the natural soils or the artificial soils above-mentioned cannot independently meet all the requirements of water retention, water permeability, air permeability, plant supporting and holding properties and the like.

More specifically, as to the natural soils, the leaf mold is nutritious and excellent in water retention, water permeability and air permeability, but has poor plant supporting and holding properties. The sands are excellent in water permeability, but are less nutritious and have poor water retention and plant supporting and holding properties.

The artificial soils are excellent in air permeability and the like, but are expensive and apt to easily dry.

Accordingly, to meet the requirements of water retention, air permeability and the like, it is required to suitably mix a variety of natural and artificial soils. Such soil preparation is troublesome. Further, both natural and artificial soils are relatively weighty, causing handling inconvenience in transportation or the like. This causes the soil preparation to be more complicated.

There has been proposed a plant holding body having improved water permeability and air permeability, in which (i) 30 to 60 parts of dry peat moss and (ii) 20 to 50 parts of synthetic resin foamed pieces and nutritive elements are bonded together with 15 to 20 parts of a polyurethane binder (United States Patent Publication No. 3834072). This plant holding body is manufactured without use of a foaming agent.

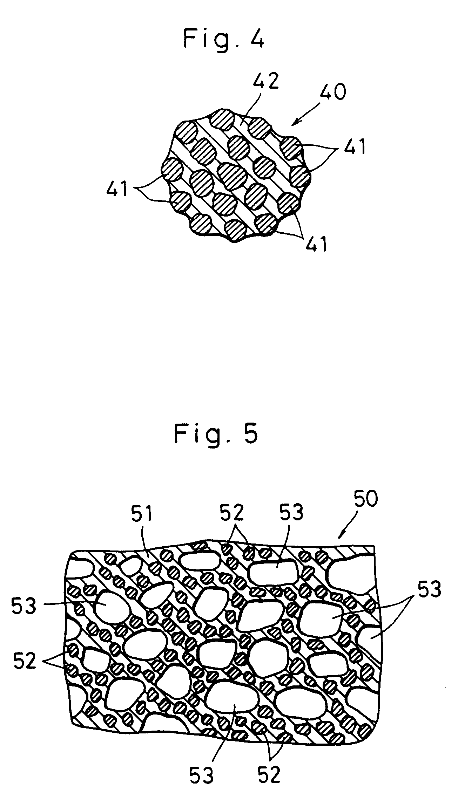

The plant holding body disclosed by the publication above-mentioned is made by kneading peat moss having a small water content, with the polyurethane binder. As shown in Fig. 4, a block 40 of soil particles thus obtained is a mere mass in which a number of particles 41 are bonded to one another with the polyurethane binder 42. Accordingly, this plant holding body is still weighty, causing handling inconvenience in transportation and the like. Further, the particle block 40 is hard, causing the root spreading resistance to be increased. This prevents the root of a plant from entering into the block 40, failing to assure sufficient plant supporting and holding properties.

In addition to the above, there has been proposed a foamed body, suitably used for building materials, containing a urethane prepolymer and inorganic powder (Japanese Publication for examined patent application No. 3800/1978).

The foamed body disclosed by the publication above-mentioned is obtained by mixing a liquid having a low boiling point such as monofluoro trichloromethane or the like, with water, an inorganic powder and a urethane prepolymer, and foaming the resultant mixture. The resultant foamed body contains about 33 to 67 % by weight of the inorganic powder and 33 to 67 % by weight of the water-soluble urethane prepolymer. As shown in Fig. 5, a number of the inorganic powder particles 52 and air bubbles 53 are dispersed in a foamed body of a urethane prepolymer 50. It may be considered that the foamed body thus obtained is used as artificial soil for plant culture to reduce the weight thereof.

However, the foamed body 50 is still insufficient to be used as the artificial soil for plant culture. That is, the foamed body 50 in its entirety has a foamed structure of a urethane prepolymer. Accordingly, when the foamed body 50 is used as the artificial soil for plant culture, the root spreading resistance becomes great. This prevents the root of a plant from easily entering into such artificial soil, assuring sufficient plant supporting and holding properties. US-A-4 175 355 discloses a rooting medium comprising a resilient integral body of spongy open-celled hydrophilic polyurethane polymer. The polymer forms a substantially continuous phase extending throughout the body and has passages, most of capillary size, forming a substantially continuous phase extending through the body. Soil particles are also distributed throughout the body.

It is an object of the present invention to provide light-weight porous artificial soil for plant culture which can meet all requirements of water retention, water permeability, air permeability, and the like, and which is excellent in plant supporting and holding properties.

It is also an object of the invention to provide an economical and safe method of manufacturing porous artificial soil for plant culture.

In one aspect the invention provides a porous artificial soil for plant culture comprising a first, substantially continuous matrix of solid material and a second, substantially continuous matrix of inter-communicating voids (24) distributed throughout the first matrix, the first matrix consisting of dispersed organic and/or inorganic matter (11), as a structural component, in an amount of at least 70% by weight, together with a hydrophilic polyurethane polymer, characterised in that the polymer is in the form of individual polymer pieces (23), as a binding component, the polymer pieces (23) being dispersed throughout the first matrix, the porous artificial soil containing the said structural component in an amount from 70 to 99% by weight.

In another aspect the invention provides a method of manufacturing this porous artificial soil, the method comprising: introducing organic and/or inorganic matter into an aqueous dispersive medium; introducing at least one water-soluble urethane prepolymer into the aqueous dispersive medium; introducing gas into the aqueous dispersive medium, in a gaseous or liquid state; agitating the aqueous dispersive medium so that the organic and/or inorganic matter and the prepolymer are mixed therewith and so that bubbles of the gas are distributed throughout the mixture; and hardening the prepolymer while the bubbles remain distributed throughout the mixture, thereby forming dispersed polymer pieces as a binding component binding the dispersed organic and/or inorganic matter together as a structural component making up 70 to 99% by weight of the porous artificial soil.

The gas may be introduced by forcibly introducing the gas into the aqueous medium during mixing or by introducing a liquid of low boiling point which vaporizes during mixing.

The bulk density of the organic and/or inorganic matter, e.g. soil, may be 0.5 g/cm³ or less. The bulk ratio of the organic and/or inorganic matter to the water-soluble urethane prepolymer may be in a range from 2:1 to 100:1.

The method may include the steps of: adding and mixing the water-soluble urethane prepolymer, or the structural component, to and with the aqueous dispersive medium to produce a first mixture; adding and mixing the structural component, or the water-soluble urethane prepolymer, to and with the first mixture to produce a second mixture; and mixing the gas with the first or second mixture at a suitable time during mixing.

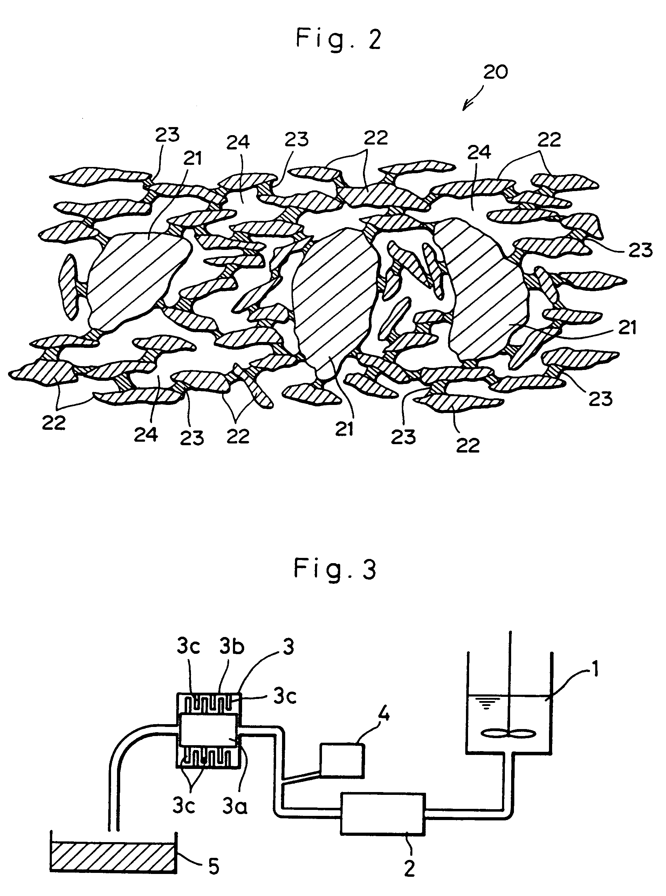

Fig. 2 is a schematic section view illustrating an artificial soil in accordance with the invention. As shown in Fig. 2, the artificial soil 20 is a porous body having a number of air gaps 24, in which (i) organic or inorganic particles 21 having a bulk density of 0.5 g/cm³ or less and (ii) soil, gypsum and the like 22 are bonded together with urethane polymer pieces 23. In a dispersive liquid, the particles 21 are partially bonded with a suitable amount of the urethane polymer pieces 23, to be discussed later. Consequently, adjacent voids 24 communicate with each other.

As the water-soluble urethane prepolymer, a chemical compound expressed by one of the following general formulas (a) and (b) is preferably used, since such a compound has good dispersibility in the aqueous dispersive medium. However, there may be used a variety of water-soluble prepolymers containing a free isocyanate group, for example, those obtained by reacting hydrophilic polyether polyol and an excessive amount of an isocyanate compound so as to produce a product having a free isocyanate group. 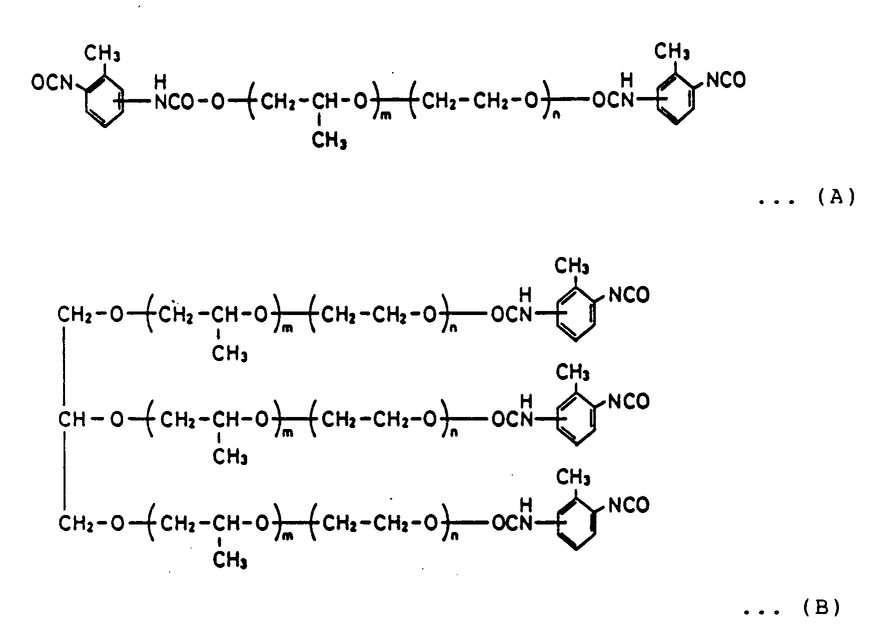
In the general formulas (A) and (B), m is an integer from 5 to 50 and n is an integer from 50 to 150.

To the water-soluble urethane prepolymer, there may be added ethylene glycol monomethyl ether adipate, toluene diisocyanate or diphenyl methane diisocyanate, as a crosslinking assistant, and ethyl methyl ketone as an organic solvent.

In the Specification, the aqueous dispersive medium refers to a liquid for uniformly dispersing the water-soluble urethane prepolymer and the components such as organic matter, inorganic matter and soil. Further, the aqueous dispersive medium contains water such that the dispersed water-soluble urethane prepolymer is crosslinked to form a three-dimensional crosslinking structure, whereby the components above-mentioned are bonded together.

The aqueous dispersive medium also serves to adjust the viscosity of the dispersion liquid to a value suitable for foaming.

Examples of the hydrophilic polyether polyol include (i) polyethylene glycol alone, and (ii) reaction products of polyhydric alcohol such as propylene glycol, polypropylene glycol, butanediol, 1,6-hexanediol, trimethylol propane, trimethylol ethane, pentaerythritol, sorbitol, polyester polyol, bisphenol A, to an alkylene oxide such as ethylene oxide, propylene oxide or the like.

Examples of the isocyanate compound include chemical compounds containing two or more isocyanate groups such as tolylene diisocyanate, xylylene diisocyanate, diphenylmethane diisocyanate, hexamethylene diisocyanate, isophorone diisocyanate and the like.

In the water-soluble urethane prepolymer, the isocyanate group may be masked and stabilized with a masking agent such as acidic sodium bisulfite or the like.

When the water-soluble urethane prepolymer is dissolved in the aqueous dispersive medium, the isocyanate groups in the prepolymer pieces react with water such that the urethane polymer pieces are crosslinked to produce a three-dimensional crosslinking structure. This causes the urethane polymer pieces to be water-insoluble. At this time, the organic matter and/or the inorganic matter dispersed in the dispersion liquid are bonded together.

The porous artificial soil for plant culture in accordance with the invention preferably contains organic matter and/or inorganic matter having a bulk density of 0.5 g/cm³ or less, in order to reduce the weight of the resultant artificial soil.

Examples of the organic matter having the bulk density of 0.5 g/cm³ or less include peat moss, Barkumin, rice hulls, sludge, finely-crushed plastic pieces, paper scraps, waste tire powder, sawdust.

Examples of the inorganic matter having the bulk density of 0.5 g/cm³ or less include silica and light-weight structural material which may be used as artificial soil such as pearlite, vermiculite and the like.

The concentration of the organic matter and/or the inorganic matter is limited to a range of from 70 to 99 % by weight, and preferably in a range from of 85 to 99 % by weight. If the concentration is less than 70 % by weight, the proportional ratio of polyuretane is increased. This not only increases the manufacturing cost, but also exerts a bad influence upon the growth of a plant including increase in root spreading resistance. On the other hand, if the concentration exceeds 99 % by weight, it becomes difficult to integrate the artificial soil and to assure sufficient plant supporting and holding properties.

The bulk ratio (bulk volume ratio) of the organic matter and/or the inorganic matter to the water-soluble urethane prepolymer is in a range from 2:1 to 100:1. If the water-soluble urethane prepolymer is loaded in a ratio greater than 100:1, the water permeability is lowered to deteriorate drainage. This also excessively increases the viscosity of the artificial soil, thereby to increase the root spreading resistance. This prevents the growth of a plant.

On the other hand, if the water-soluble urethane prepolymer is loaded in a ratio smaller than 2:1, the resultant soil viscosity is excessively lowered. This makes it difficult to integrate the artificial soil as a block. Also, this fails to assure sufficient plant supporting and holding properties.

The term of % by weight refers to the concentration of a substance concerned in the artificial soil after the artificial soil has been dried to remove the water content therein. This also applies to the term of % by weight used in the following porous artificial soils for plant culture to be discussed later.

To adjust the bulk density of the artificial soil to a preferable range (from 0.05 to 1.0 g/cm³) to be discussed later, there may be added in a suitable amount, as necessary, natural soils including (i) soils such as red clay, black soil, Kanuma soil, Arakida soil, Keto soil, leaf mold, diatomaceous silica, Masa soil and the like, and (ii) sands such as Kiryu sand, Asaake sand, pumice, Fuji sand and the like. The natural soils mainly include inorganic matter and further include organic matter, microbes, air, water and the like. Generally, the natural soils have an absolute specific gravity of about 2.2 to 2.7 and a bulk specific gravity of about 1.3.

There may be contained a hydraulic substance such as gypsum or the like, and an organic or inorganic fibrous substance. Such substances not only give shape retention to the resultant artificial soil, but also further enhance the plant supporting and holding properties.

Fertilizer may be added. Examples of the fertilizer include (i) natural fertilizer such as bone powder, oil cake and the like, (ii) chemical fertilizer and fertilizer such as ammonium sulfate, ammonium nitrate, urea, ammonium chloride, lime-nitrogen, superphosphate, fused phosphate fertilizer, calcined phosphate, potassium chloride, potassium sulfate or the like, and (iii) fertilizer containing, in addition to the fertilizers above-mentioned, calcium, magnesium, manganese, zinc, copper, molybdenum, iron, boron and the like.

One or more fertilizers above-mentioned may be added, normally in a range of from 1 to 30 % by weight. The fertilizers above-mentioned may be contained in the artificial soil by adding the fertilizers to the artificial soil during its production, or by impregnating or spraying the fertilizers in or to the artificial soil after its production.

The artificial soil may contain (i) terra alba silicate for prevention of soil decay and for purification of the soil, (ii) an activating agent for accelerating the activity of a plant, (iii) a growth restraining agent to prevent a plant from excessively growing, (iv) a root-decay preventive agent, (v) a coloring agent, and (vi) a PH modifier such as slaked lime.

A water-absorptive polymer may be contained in the artificial soil. The use of the water-absorptive polymer may lengthen the water sprinkling cycle required in plant culture. This may reduce the labor in plant culture.

Figure 2 a porous artificial soil 20 in which a plurality of organic and/or inorganic particles 21 are bonded together with urethane polymer pieces 23 and in which the aqueous dispersive medium is present in the pores in the soil 20. The artificial soil 20 may be dried to evaporate water content in the pores. This not only facilitates the transportation of the artificial soil 20, but also accelerates the inter-communication of the pores.

The water-soluble urethane prepolymer and the organic matter and/or the inorganic matter may be mixed with the aqueous dispersive medium by a variety of methods including the following methods (a) and (b):
(a): The water-soluble urethane prepolymer is dissolved in the aqueous dispersive medium to produce a water solution. The organic matter and/or the inorganic matter are then added to and mixed with the water solution thus produced; and
(b): The organic matter and/or the inorganic matter are dispersed in the aqueous dipersive medium, after which the water-soluble urethane prepolymer is added to and mixed with this aqueous dispersive medium.

According to the method (b) by which the water-soluble urethane prepolymer is later mixed with the aqueous dispersive medium, it is possible to improve the working efficiency, as well as the stability of the dispersion liquid in which the organic matter and/or the inorganic matter are being dispersed in the aqueous dispersive medium, as compared with the method (a) by which the water-soluble urethane prepolymer is previously mixed with the aqueous dispersive medium. Further, according to the method (b), the dispersion liquid may be heated, thereby to enhance the dispersibility of the organic matter and/or inorganic matter in the dispersion liquid. That is, according to the method (b), the uniformity of the resultant dispersion liquid may be enhanced. Accordingly, even though the concentration of the organic matter and/or inorganic matter is increased, it is possible to improve the porous body in uniformity, integrality, water retention, water permeability, air permeability, plant supporting and holding properties and the like.

To enhance the dispersibility of the organic matter and/or the inorganic matter in the aqueous dispersive medium, a nonionic, cationic or other surface active agent may be added to the aqueous dispersive medium. Alternately, there may be added organic matter and/or inorganic matter to which surface treatment has been previously made with a surface active agent.

One or more surface active agents may be used generally in a range from 0.01 to 5 parts by weight and preferably in a range from 0.1 to 0.5 part by weight with respect to 100 parts by weight of the organic matter and/or the inorganic matter.

The proportional ratio of the organic matter and/or the inorganic matter to the aqueous dispersive medium may be suitably set without prejudice to the working efficiency, dispersibility and the like of the organic matter and/or the inorganic matter. Generally, 50 to 6000 parts by weight of the aqueous dispersive medium may be used for 100 parts by weight of the organic matter and/or the inorganic matter.

The proportional ratio of the water-soluble urethane prepolymer to the aqueous dispersive medium may be suitably set according to the working efficiency and the like. Generally, 200 to 6000 parts by weight and preferably 500 to 4000 parts by weight of the aqueous dispersive medium may be used for 100 parts by weight of the water-soluble urethane prepolymer. If less than 200 parts by weight of the aqueous dispersive medium is used, it is difficult to prepare a uniform mixture. On the contrary, if more than 6000 parts by weight of the aqueous dispersive medium is used, it is difficult to obtain a gelled product by reaction of the water-soluble urethane prepolymer with the aqueous dispersive medium. This causes the resultant porous artificial soil for plant culture to be fragile.

By curing the dispersion liquid consisting of the composition above-mentioned, a block-like water-containing porous artificial soil may be obtained. This water-containing artificial soil may be used as it is as an artificial soil block, or crushed into pieces having suitable sizes, or formed into suitable shapes with the use of a sugar coating machine, a pelletizer, a noodle making machine or the like.

When the soil is to be dried to remove water content therein, the soil may be dried at a suitable stage under drying conditions to be suitably set. For example, the soil may be subjected to decompression drying or heating drying at a temperature of 100°C or more for about 1 to 10 hours.

The total concentration of the structural components is in a range from 70 to 99 % by weight, and preferably in a range from 85 to 99 % by weight. With the concentration less than 70 % by weight, the concentration of polyurethane is accordingly increased. This not only increases the manufacturing cost, but also exerts a bad influence upon plant growth such as increase in plant root spreading resistance. On the other hand, if the concentration exceeds 99 % by weight, it is difficult not only to integrate the resultant artificial soil, but also to assure sufficient plant supporting and holding properties.

Examples of the organic matter include not only a variety of the organic matters mentioned above but also (i) natural fibers such as cotton, jute and the like, (ii) synthetic fibers such as nylon, polyester and the like, (iii) bog moss, and (iv) rice hulls and the like. Most of these examples of the organic matter contain nitrogen, phosphoric acid, potassium, ash content and the like. When the organic matter is decomposed, these structural components are converted into a state where they can be fed. Thus, these structural components may be taken as nourishment by a plant.

Further, the organic matter is useful not only to decrease the bulk density of the porous artificial soil, but also to enhance the air permeability. Natural and synthetic fibers are useful to enhance the shape retention of the porous artificial soil.

Examples of the inorganic matter include: inorganic fibers such as rock wool, asbestos, glass fibers and the like; fly ash; silica; gypsum; cement; dolomite plaster and the like. Of these, the gypsum is preferable, because it serves as an agent for increasing the viscosity of the dispersion liquid, thereby to aid the formation of bubbles by gas or a liquid having a low boiling point.

Examples of the gypsum include natural gypsum and chemical gypsum. Examples of the natural gypsum include: transparent gypsum of a colorless transparent plate-like crystal; alabaster of a pure-white fine crystal; fiber gypsum having silk-yarn luster; needle-like, leaf-like, particle-like and earth-like gypsum.

Examples of the chemical gypsum include phosphogypsum, titanogypsum, fluorogypsum, gypsum obtained by desulfurization from fuel oil, gypsum obtained as a secondary product by flue gas desulfurization, and the like.

To enhance the shape retention and the plant supporting and holding properties of the artificial soil, it is preferable to use hydraulic calcined gypsum obtained by heat-dehydration of the gypsum above-mentioned. That is, when the hydraulic calcined gypsum is used, the gypsum is hardened to prevent the foamed body from being reduced in volume after driying. This enables the resultant foamed body to maintain the original shape at the time of forming. This results in production of light-weight porous artificial soil having a small bulk density and excellent plant supporting and holding properties.

Examples of the calcined gypsum include: α-gypsum dehydrated in a saline liquid such as aluminium sulfate in an autoclave; β-gypsum heatingly dehydrated in a vacuum; gypsum heatingly dehydrated with a kettle; hemihydrate gypsum and the like.

Preferably, the concentration of the gypsum is 15 % by weight or more and less than 70 % by weight. If the concentration of the gypsum is less than 15 % by weight, the viscosity of the aqueous dispersive medium is not sufficiently increased and, therefore, the aqueous dispersive medium is not foamed when the gypsum and the organic matter are added to and dispersed in the aqueous dispersive medium. This prevents the dispersion liquid from foaming.

On the other hand, if the concentration of the gypsum is 70 % by weight or more, the resultant artificial soil is too hard. This excessively increases the root spreading resistance, provoking the problem preventing the root from normally growing dependent on the type of a plant.

When the gypsum and the organic matter are combined as the structural components, the total concentration of the gypsum and the organic matter is preferably in a range from 70 to 99 % by weight with respect to the total weight of the porous artificial soil. The reason of the foregoing is the same as the reason of why the proportional ratio of the structural components to the water-soluble urethane prepolymer is limited.

Out of the examples of the inorganic matter, the inorganic fibers are useful to enhance the shape retention of the resultant artificial soil.

A variety of soils may be used. Not only natural soils above-mentioned, but also artificial soils such as vermiculite, pearlite and the like. One or more soils may be used as combined. Normally, there are used such soils having particle size of 5 mm or less.

The artificial soil may contain fertilizer, terra abla silicate, an activating agent, a growth restraining agent, a root-decay preventive agent, a coloring agent, a water-absorptive polymer, a PH modifier and the like.

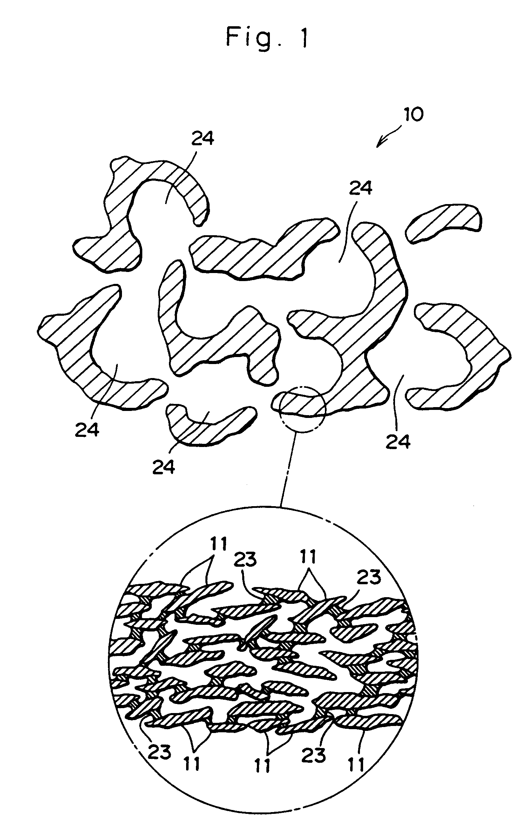

Fig. 1 is a schematic section view of the artificial soil in accordance with the invention of. In Figs. 1 and 2, identical or substantially identical parts are designated by the same reference numerals.

In production of the porous artificial soil for plant culture, at least a water-soluble urethane prepolymer, an organic matter, an inorganic matter and/or soil, and a liquid having a low boiling point are mixed with an aqueous dispersive medium, thereby to produce a porous artificial soil 10 in which a plurality of particles 11 of the organic matter, the inorganic matter or the soil are partially bonded with urethane polymer pieces 23, as shown in Fig. 1. At the time of mixing, the low-boiling-point liquid is evaporated by the reaction heat, the agitation heat and the like generated at the time of crosslinking of the water-soluble urethane prepolymer pieces. Accordingly, the size of formed pores 24 are greater than those in Fig. 2.

The artificial soil 10 may be dried to transpire the water content in the pores. This may not only serve the convenience of transportation of the artificial soil 10, but also promote the intercommunication of the pores with one another. The timing and conditions of such drying may be determined as mentioned earlier.

The water-soluble urethane prepolymer, the organic matter, the inorganic matter and/or the soil, and the low-boiling-point liquid may be mixed with the aqueous dispersive medium by a variety of methods including the following methods (a) and (b):
(a): The water-soluble urethane prepolymer is added to the aqueous dispersive medium, after which the structural components are added. At a suitable stage before the urethane polymer is cured, the low-boiling-point liquid is mixed with the dispersion liquid to evaporate the low-boiling-point liquid, causing the dispersion liquid to foam; and
(b): The structural components are added to the aqueous dipersive medium, after which the water-soluble urethane prepolymer is mixed. At a suitable stage before the water-soluble urethane prepolymer is cured by polymerization, the low-boiling-point liquid is mixed with the dispersion liquid and then evaporated, causing the dispersion liquid to foam.

To obtain a uniform foamed body, it is preferable to heat the dispersion liquid.

According to the method (b) above-mentioned, while there is prepared a mixture liquid containing the low-boiling-point liquid and the water-soluble urethane prepolymer, there may be prepared a dispersion liquid of the structural components adapted to be heated to a temperature higher than the boiling point of the low-boiling-point liquid at the time when it is mixed with the mixture liquid above-mentioned. By mixing the mixture liquid with the dispersion liquid, foaming may be carried out at a low temperature.

More specifically, to improve the foaming efficiency, a liquid having a boiling point lower than room temperature is used as the low-boiling-point liquid. Also, the dispersion liquid is set to a temperature, for example 25°C or more, higher than the boiling point of the low-boiling-point liquid in a dispersion liquid obtained by mixing the first-mentioned dispersion liquid with the mixture liquid. When the mixture liquid and the dispersion liquid are mixed with each other, the temperature of the resultant dispersion liquid becomes higher than the boiling point of the low-boiling-point liquid. Accordingly, the dispersion liquid may be foamed at a temperature lower than room temperature.

Dependent on the types and amounts of the structural components and the low-boiling-point liquid to be used and dependent on the agitation condition, the low-boiling-point liquid may be evaporated due to the reaction heat, the agitation heat and the like. In this case, it is not always required that the dispersion liquid be heated to a temperature higher than the boiling point of the low-boiling-point liquid.

According to the method above-mentioned, the mixture liquid containing the water-soluble urethane prepolymer is prepared independently from the dispersion liquid containing the aqueous dispersive medium which is reactive with the water-soluble urethane prepolymer. Accordingly, the mixture liquid and the dispersion liquid may be improved in stability and working efficiency as compared with the method by which the water-soluble urethane prepolymer and the aqueous dispersive medium are simultaneously mixed. Further, the temperature of the dispersion liquid may be raised. This enables to enhance the dispersibility of the structural components in the dispersion liquid. Accordingly, the uniformity of the resultant dispersion liquid obtained by mixing the mixture liquid and the dispersion liquid, may be enhanced. Thus, even though the concentration of the structural components is high, the resultant foamed body may have higher uniformity, integrality, water retention, air permeability and plant holding and supporting properties.

According to the desired foaming temperature, a suitable low-boiling-point liquid may be selected. To carry out the evaporation and foaming at a low temperature, it is preferable to use as the low-boiling-point liquid, for example, pentane, isopentane, cyclopentane, diethyl ether, ethyl chloride, isopropyl chloride, dichloromethane, monofluorotrichloromethane (flon 11), monofluorodichloromethane (flon 21), trichlorotrifluoroethane (flon 113), dichlorotetrafluoroethane (flon 114), and the like. One or more examples of the low-boiling-point liquid may be used as mixed. A suitable amount of the low-boiling-point liquid depends on the expansion rate to be used, and the like. To produce uniform bubbles, it is a common practice to use 3 to 300 parts by weight and preferably 20 to 200 parts by weight of the low-boiling-point liquid for 100 parts by weight of the water-soluble urethane prepolymer. To enhance the uniformity of the bubbles, a bubbles modifier such as silicone may be added to the mixture liquid.

The water-soluble urethane prepolymer is used in an amount corresponding to the amount of the polyurethane contained in the porous artificial soil. Generally, 1 to 40 parts by weight and preferably 2 to 30 parts by weight of the water-soluble urethane prepolymer is used for 100 parts by weight of the structural components.

To enhance the dispersibility of the structural components and to assure a sufficient expansion rate, it is preferable to jointly use a nonionic, cationic or anionic surface active agent, or to use structural components to which surface treatment has been made with a surface active agent. One or more examples of the surface active agent may be used as mixed. Normally, 0.001 to 5 parts by weight and preferably 0.005 to 0.5 parts by weight of the surface active agent is used for 100 parts by weight of the structural components.

To aid the foaming, there may be added, to the dispersion liquid, a thickening agent such as polyvinyl alcohol, carboxymethyl cellulose and the like.

The proportional ratio of the structural components to the aqueous dispersive medium may be suitably set without prejudice to the dispersibility of the structural components, the working efficiency and the like. Normally, 30 to 1500 parts by weight of the aqueous dispersive medium is used for 100 parts by weight of the structural components. By increasing or decreasing the amount of the aqueous dispersive medium, the viscosity of the water dispersion liquid may be so adjusted as to be suitable for foaming.

The proportional ratio of the water-soluble urethane prepolymer to the aqueous dispersive medium may be suitably set according to the working efficiency and the like. 200 to 6000 parts by weight and preferably 500 to 4000 parts by weight of the aqueous dispersive medium may be used for 100 parts by weight of the water-soluble urethane prepolymer. If less than 200 parts by weight of the aqueous dispersive medium is used, it is difficult to obtain a uniform mixture. On the other hand, if more than 6000 parts by weight of the aqueous dispersive medium is used, this requires a great amount of heat for removing the aqueous dispersive medium from the water-containing foamed body. Further, because of the reaction of the water-soluble urethane prepolymer with the aqueous dispersive medium, it is difficult to obtain a gel-like product. This causes the resultant porous artificial soil to be fragile.

The dispersion liquid having the composition above-mentioned may be prepared by simultaneously mixing the aqueous dispersive medium, the water-soluble urethane prepolymer, the structural components and the low-boiling-point liquid. However, if they are simultaneously mixed, foaming and viscosity increase due to the reaction of the aqueous dispersive medium with the water-soluble urethane prepolymer, as well as viscosity increase due to addition of the structural components do not only deteriorate the working efficiency, but also make it difficult to increase the concentration of the structural components to more than about 65 % by weight. It is, therefore, difficult to obtain a foamed body having a high concentration of the structural components. Further, the bubbles are not uniform in the resultant foamed body. This makes it difficult to simultaneously satisfy the requirements of shape retention and the air permeability. In particular, if desired to increase the concentration of the structural components, the resultant foamed body lacks shape retention and integrity. This not only causes the handling thereof to be troublesome, but also fails to assure sufficient plant supporting and holding properties.

In the foregoing, the description has been made of the porous artificial soil for plant culture obtained with the use of a low-boiling-point liquid. However, the use of the low-boiling-point liquid such as flon or the like may involve the likelihood of destruction of the ozone layer in the atmosphere. Further, the use of a combustible such as pentane or the like would not be recommended in view of safety. Mixing gas is advantageous in view of cost and handling safety.

Examples of this artificial soil manufacturing method with the use of the foaming method by gas-mixing, include the following two methods in which the water-soluble urethane prepolymer and the structural components are loaded in different orders. In the following methods, the gas may be mixed at a suitable stage, e.g., at the time of mixing and dispersion of the structural components or after such mixing and dispersion.
(i) After the water-soluble urethane prepolymer has been dissolved in the aqueous dispersive medium, the structural components are mixed.
(ii) After the structural components have been dispersed in the aqueous dispersive medium, the water-soluble urethane prepolymer is mixed.

According to the method (ii) by which the water-soluble urethane prepolymer is secondly mixed with the aqueous dispersive medium, it is possible to enhance both working efficiency and stability of the dispersion liquid in which the structural components are being dispersed in the aqueous dispersive medium, as compared with the method (i) by which the water-soluble urethane prepolymer is previously mixed with the aqueous dispersive medium.

According to the method (ii), the temperature of the dispersion liquid may be increased. This enables to enhance the dispersibility of the structural components in the dispersion liquid. Accordingly, the method (ii) enables to enhance the uniformity of the dispersion liquid obtained by mixing the water-soluble urethane prepolymer with the aqueous dispersive medium. Thus, even though the concentration of the structural components is high, the resultant foamed body may have better uniformity, integrality, water retention, air permeability, plant supporting and holding properties and the like.

Examples of the gas feed method include (i) a method by which air is swallowed by moving agitating blades vertically and horizontally, (ii) a method by which gas is forcibly fed into the dispersion liquid such that the gas and the dispersion liquid are mixed and agitated, and (iii) a method by which gas is injected into the dispersion liquid in a hermetically sealed system, after which the gas and the dispersion liquid are mixed and agitated.

The gas feed amount may be determined according to the desired bulk density and the amount of the dispersion liquid to be used. That is, if the gas is fed in excess with respect to the amount of the dispersion liquid, this provokes bumping. Accordingly, a uniform foamed body may not be obtained.

Examples of the gas to be fed include air, nitrogen, carbonic acid gas and the like.

According to this manufacturing method, a foamed body is obtained by swallowing the gas without use of a foaming agent. This not only reduces the cost, but also eliminates the possibility that a low-boiling-point substance such as flon or the like destructs the ozone layer in the atmosphere. Further, this method is superior in safety in that a combustible such as pentane or the like is not used.

When swallowing the air, it is required to jointly use a nonionic-type, cationic-type or anionic-type surface active agent together with the structural components, or to use structural components to which surface treatment has been made with any of these surface active agents, in order to obtain a sufficient expansion rate. One or more examples of the surface active agent may be used as mixed. Normally, 0.001 to 5 parts by weight and preferably 0.005 to 1.5 parts by weight of the surface active agent is used for 100 parts by weight of the structural components.

To accelerate the foaming, the thickening agent mentioned earlier may be added to the dispersion liquid.

The proportional ratio of the structural components to the aqueous dispersive medium may be suitably set without prejudice to the working efficiency and the dispersibility of the structural components. Normally, 30 to 1500 parts by weight of the aqueous dispersive medium is used for 100 parts by weight of the structural components.

The proportional ratio of the water-soluble urethane prepolymer to the aqueous dispersive medium may be suitably set according to the working efficiency and the like. Normally, 200 to 6000 parts by weight and preferably 500 to 4000 parts by weight of the aqueous dispersive medium is used for 100 parts by weight of the water-soluble urethane prepolymer.

The use of less than 200 parts by weight of the aqueous dispersive medium makes it difficult to obtain a uniform mixture. On the other hand, the use of more than 6000 parts by weight requires a great amount of heat for removing water content from the water-containing foamed body. Further, because of the reaction of the water-soluble urethane prepolymer to the aqueous dispersive medium, it is difficult to obtain a gel-like product. This causes the resultant porous artificial soil to be fragile.

The dispersion liquid mixingly containing the low-boiling-point liquid or the gas, may be poured into a suitable vessel and then cured, thus producing water-containing porous artificial soil.

No restrictions are particularly imposed to the expansion rate by the gas or the low-boiling-point liquid in the porous artificial soil for plant culture of the present invention. Normally, the artificial soil has an expansion rate of 2 to 100, and preferably in a range from 5 to 50.

When a hydraulic substance such as calcined gypsum or the like is added to the dispersion liquid, the curing of the hydraulic substance prevents the resultant foamed body from being reduced in volume. This enables the manufacture of light-weight artificial soil having a small bulk density and excellent plant supporting and holding properties.

The artificial soil thus obtained may be used as it is, or crushed into pieces having suitable sizes, or formed into suitable shapes with the use of a sugar coating machine, a pelletizer, a noodle making machine or the like. Thus, there may be obtained porous artificial soil for plant culture in a variety of shapes, e.g., block, particle, pellet, noodle, band and the like.

The artificial soil thus obtained may be dried to transpire the water content in the pores therein. This not only serves the convenience of transportation of the artificial soil 20, but also promotes the communication of the pores with one another. The water removal may be carried out in the same manner mentioned earlier.

Examples of the shape of the porous artificial soil for plant culture of the present invention include block, particle, pellet, noodle and the like. The block-shape artificial soil is easy to handle in transportation and the like. Further, when the block-shape artificial soil is used as soil for flowerpots, there is no possibility of the soil falling from the flowerpots to contaminate the environment, since the soil is in a unitary structure.

The artificial soil in the form of particle, pellet, noodle and the like may be loaded in plant-culture vessels in various shapes, in the same manner as natural soil. Further, such artificial soil is lighter in weight than the natural soil. This advantageously facilitates the handling or the like. In the porous artificial soil in the form of particle, pellet, noodle or the like loaded in a plant-culture vessel, there are formed gaps large enough to provoke no capillary action. This is advantageous for drainage. Further, it is possible to form a gas phase indispensable to prevent the root decay of a plant. Such soil is flexible and presents a small root spreading resistance. This permits the root to enter not only the gaps in the porous artificial soil, but also each piece of the porous artificial soil in the form of particle, pellet, noodle or the like. This enables the root to spread in a good manner. This assures excellent plant supporting and holding properties. The root of a plant may get intertwined with the noodle-like porous artificial soil body to further improve the plant supporting and holding properties. Further, the noodle-like porous artificial soil body may be used for a variety of applications including an application for culture of an orchid, instead of bog moss currently widely used for such a purpose.

In the porous artificial soils for plant culture in no particular restrictions are imposed on the bulk density. However, the bulk density is preferably in a range from 0.05 to 1.0 g/cm³, and more preferably in a range from 0.1 to 0.5 g/cm³. A bulk density less than 0.05 g/cm³ assures in sufficient plant supporting and holding properties. On the other hand, a bulk density exceeding 1.0 g/cm³ not only deteriorates the water retention and the air permeability, but also makes it difficult to reduce the weight of the artificial soil.
Figure 1 and Figure 2 are schematic section views illustrating the structures of artificial soils in accordance with the present invention;
Figure 3 is a schematic view of apparatus used for making Example 4;
Figure 4 is a schematic section view illustrating the structure of a conventional plant culture ground;
Figure 5 is a schematic section view of the structure of a conventional foamed body; and
Figure 6, Figure 7 and Figure 8 are electron microscope pictures of the structure of the artificial soil in accordance with the present invention.

The following description will discuss in more detail the present invention with reference to embodiments thereof.

### Example 1

Dissolved in 360 grs. of water was 1.5 g of a surface active agent ("EMAL D-3-D" manufactured by Cao Co., Ltd). Added to this water solution were (i) 45 grs. of peat moss (manufactured by Gulf Island Peat Moss Co., Inc.) and (ii) 150 grs. of calcined gypsum (under the tradename of "K" manufactured by Sanesu Sekkou Co., Ltd.). The resultant mixture was then agitated and mixed in a beaker to prepare a water dispersion liquid. Added to this water dispersion liquid was 20 grs. of a water-soluble urethane prepolymer ("OH-GROUT OH-1" manufactured by Toho Chemical Industry Co., Ltd., which is a composition obtained by mixing toluene diisocyanate with a prepolymer of the organic isocyanate polyether diol type having m of 10 to 30 and n of 70 to 90 in the general formula (A). The resultant mixture liquid was then uniformly agitated and mixed. By vertically moving the agitating blades, the mixture liquid was further agitated and mixed with air swallowed as much as possible.

The mixture dispersion liquid was poured into a mold frame of 250 mm x 250 mm x 35 mm, and allowed to cure at a temperature of 20°C for 10 minutes. Thus, an artificial soil block was produced.

After dried at a temperature of 60°C for three hours, the artificial soil block contained 21 % by weight of peat moss, 70 % by weight of calcined gypsum and 9 % by weight of the urethane polymer, and presented a bulk density of 0.17 g/cm³.

Red fringed pinks were planted in this soil block, to which a sufficient amount of water was given. The soil block was then left for five days at a temperature of 20°C and a relative humidity of 65%. They germinated at a germination rate of 98%.

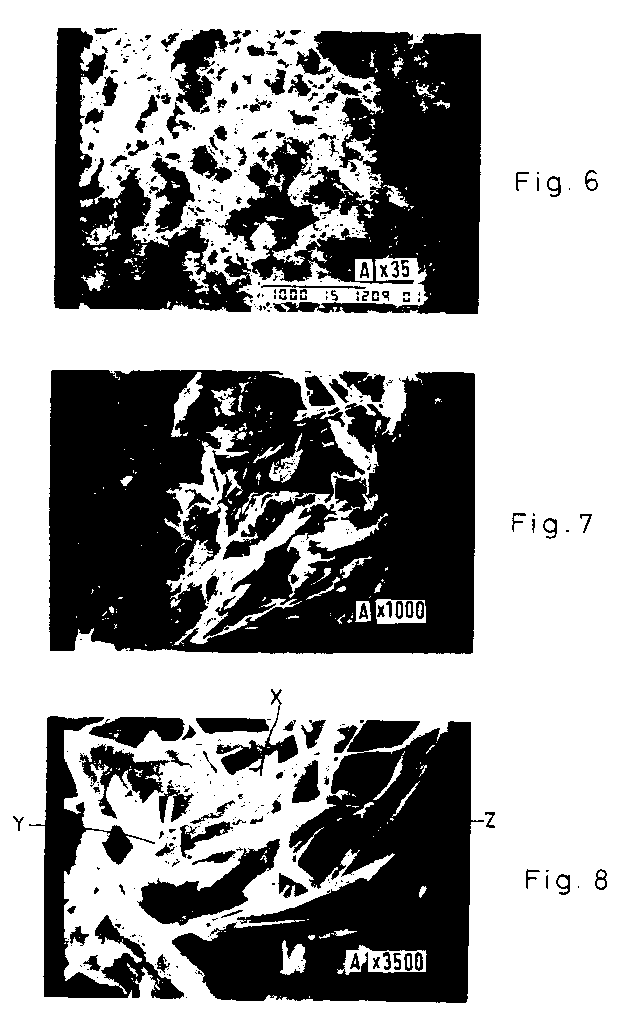

Fig. 6, Fig. 7 and Fig. 8 are the electron microscope pictures of the section of the artificial soil prepared by Example 1. Fig. 6 is a picture magnified 35 times, Fig 7 is a picture magnified 1000 times, and Fig. 8 is a picture magnified 3500 times. From the picture of Fig. 6, it is understood that the artificial soil of the present invention is porous.

From the pictures shown in Fig. 7 and Fig. 8, it is understood that the peat moss, the gypsum and the urethane polymer are in a unitary structure in the artificial soil of the present invention.

In the picture of Fig. 8, the gypsum (X) is presented by needle-like elements, the peat moss (Y) is presented by elements having scale-like surfaces, and the urethane polymer (Z) is presented by elements having slippery and sticky surfaces.

### Example 2

As an organic matter, 260 grs. of Barkumin (manufactured by Sumitomo Ringyo Co., Ltd.) was mixed with 140 grs. of calcined gypsum ("K" manufactured by Sanesu Sekkou Co., Ltd) to produce a mixture. On the other hand, 2 grs. of a surface active agent ("STARHOME DO" manufactured by Nippon Oil & Fats Co., Ltd) was dissolved in 330 grs. of water in a beaker. Dissolved in this liquid was 40 grs. of a water-soluble urethane prepolymer ("SANPLEIN WE-104" manufactured by Sanyo Chemical Industries Ltd.). The mixture above-mentioned was then added to the liquid, which was then agitated and mixed.

While air was fed into the mixture liquid through a hose from a compressor, the mixture liquid was further agitated and mixed.

The mixture liquid into which the air had been fed, was poured into a pot of a size No. 5, and allowed to cure at a temperature of 20°C for 10 minutes, thereby to produce an artificial soil block.

After dried at a temperature of 60°C for 10 hours, the artificial soil block contained 59 % by weight of Barkumin, 32 % by weight of calcined gypsum and 9 % by weight of the urethane polymer, and presented a bulk density of 0.22 g/cm³.

### Example 3

320 Grs. of water was poured into a beaker, to which calcined gypsum (under the tradename of "K" manufactured by Sanesu Gypsum Co., Ltd.) was added. The resultant mixture was uniformly agitated and mixed to produce a water dispersion liquid. During such agitation, a hose connected to a liquefied carbonic acid gas bomb (manufactured by Mitsui Toatsu Liquid Carbnoic Inc.) was introduced into this water dispersion liquid. While, with carbonic acid gas fed through the hose, the water dispersion liquid was agitated, 17 grs. of a water-soluble urethane prepolymer ("OH-GROUT OH-1" manufactured by Toho Chemical Industry Co., Ltd.) was added to the water dispersion liquid. Further, the resultant liquid was uniformly agitated and mixed.

The mixture liquid into which the carbonic acid gas had been fed, was poured into a mold frame of 250 mm x 250 mm x 35 mm. This mixture liquid was left and allowed to cure at a temperature of 20°C for 20 minutes. Thus, an artificial soil block was produced.

After dried at a temperature of 60°C for three hours, the artificial soil block contained 96 % by weight of the calcined gypsum and 4 % by weight of the urethane polymer, and presented a bulk density of 0.37 g/cm³.

### Example 4

An artificial soil block was made with the use of a mixer (type K-900 manufactured by Hansa Co., Ltd.).

More specifically, put in the mixer were (i) 59 parts by weight (hereinafter simply expressed by parts) of water and (ii) 0.01 part of a surface active agent ("EMAL D-3-D" manufactured by Cao Co., Ltd.) for 100 parts of (i) 40 parts of calcined gypsum (under the tradename of "K" manufactured by Sanesu Gypsum Co., Ltd.) and (ii) 60 parts of fly ash ("KANDEN FLYASH" manufactured by Kanden Chemical Engineering Inc.). The resultant mixture was uniformly agitated and mixed to prepare a water dispersion liquid. The water dispersion liquid was then poured into a tank 1 (See Fig. 3).

While the water dispersion liquid was mixed and agitated, this liquid was fed from the bottom of the tank 1 to a mixing head unit 3 by a snake pump 2. On the way to the mixing head unit 3, compressed air was fed under a pressure of five bars to this liquid by a compressor 4.

In the mixing head unit 3, the water dispersion liquid and the air were agitated and mixed by a plurality of projections 3c disposed at a core portion 3a and an outer pipe portion 3b. During this agitation, poured into the liquid was 10 parts of a water-soluble urethane prepolymer ("OH-GROUT OH-1" manufactured by Toho Chemical Industry Co., Ltd.).

The water dispersion liquid foamed was taken out from the outlet port of the mixing head unit 3 and poured into a mold frame 5. After left for 20 minutes, the foamed body was taken out from the mold frame 5 and dried at a temperature of 60°C for four hours by a drier. The resultant artificial soil block contained 36 % by weight of the calcined gypsum, 55 % by weight of the fly ash and 9 % by weight of the urethane polymer, and presented a bulk density of 0.32 g/cm³.

### Example 5

6.5 Kgs. of water was put into a 30-liter vessel, to which added were (i) 1 kg. of peat moss (manufactured by Gulf Island Peat Moss Co., Inc.) and (ii) 3 kgs. of calcined gypsum (under the tradename of "K" manufactured by Sanesu Gypsum Co., Ltd.). The mixture was uniformly agitated and mixed to prepare a water dispersion liquid. On the other hand, a mixture liquid was prepared by uniformly mixing and agitating (i) 0.5 kg. of a water-soluble urethane prepolymer ("OH-GROUT OH-1" manufactured by Toho chemical Industry Co., Ltd.), (ii) 3 kgs. of silicone as a bubble modifier ("SH193" manufactured by Toray Silicone Co., Ltd.) and (iii) 30 grs. of normal pentane.

When the mixture liquid was added to the water dispersion liquid under mixing and agitation, the resultant liquid started foaming.

This liquid under foaming was poured into a mold frame of 100 mm x 600 mm x 400 mm. The liquid was then left at a temperature of 20°C for 20 minutes, causing the same to be foamed. Thus, an artificial soil block was prepared.

After dried at a temperature of 90°C for 24 hours, the artificial soil block was excellent in water retention, air permeability, resiliency, shape retention and the like. This artificial soil block contained 22 % by weight of the peat moss, 67 % by weight of the calcined gypsum and 11% by weight of the urethane polymer, and presented a bulk density of 0.17 g/cm³.

### Example 6

Dissolved in 800 grs. of water was 5 grs. of a surface active agent ("EMAL D-3-D" manufactured by Cao Co., Ltd.). Added to this water solution were (i) 280 grs. of calcined gypsum (under the tradename of "K" manufactured by Sanesu Gypsum Co., Ltd.), (ii) 350 grs. of Barkmin (Sumitomo Ringyo Co., Ltd.) and (iii) 70 grs. of fly ash ("Kanden Fly Ash" manufactured by Kanden Chemical Engineering Inc.). This mixture was uniformly mixed and agitated to prepare a water dispersion liquid. Added to this water dispersion liquid was 60 grs. of a water-soluble urethane prepolymer ("OH-GROUT OH-1" manufactured by Toho Chemical Industry Co., Ltd.). When 30 grs. of monofluorotrichlorometane ("ASAHI FRON 11" manufactured by Asahi Glass Co., Ltd.) was added to the resultant mixture liquid, the liquid started foaming.

This liquid under foaming was poured into a mold frame of 100 mm x 100 mm x 320 mm. The liquid was then left at a temperature of 20°C for 20 minutes, causing the same to foam. Thus, an artificial soil block was produced.

After dried at a temperature of 70°C for two hours, the resultant artificial soil block was excellent in water retention, air permeability, resiliency, shape retention and the like. This soil block contained 37 % by weight of the calcined gypsum, 46 % by weight of Barkumin, 9 % by weight of the fly ash and 8 % by weight of the urethane polymer, and presented a bulk density of 0.24 g/cm³.

The artificial soils obtained by Example 1 to Example 6 had a foamed body structure. Accordingly, they were not only excellent in water retention and air permeability, but also light in weight. Further, they were excellent in plant supporting and holding properties.

These artificial soils were in a unitary structure as a block. Accordingly, when these artificial soils were used for indoor flowerpots, they did not fall from the flowerpots at the time of handling, thus preventing the floor or the like from being contaminated.

Further, according to the size of a flowerpot, the area and size of a culture ground and the like, a suitable number of the artificial soil blocks of a predetermined shape may be used by laying, or the artificial soil block may be suitably cut and patched. Thus, a culture ground may be easily prepared as desired. Further, this soil block may be easily cut out. It is therefore possible to set out plants or sow seeds in the cut-out portions of the block, without digging up the artificial soil. Seeds or the like may be held in the cut-out portions of the soil block, preventing the seeds from flowing out due to rain or the like.

The artificial soil blocks having different concentrations of gypsum, different nourishments, different concentrations of fertilizers and the like, may be used, in a desired manner, as combined suitably for the growth of plants to be cultivated. For example, the artificial soil block having a great concentration of fertilizer may be disposed around the root of a plant.

### Example 7

Mixed to 140 grs. of water at 60°C was 330 grs. of compound soil containing 280 grs. of soil passed through a 16-mesh sieve and 50 grs. of bone powder. This mixture was agitated to prepare a water dispersion liquid. On the other hand, there was prepared a mixture liquid by uniformly agitating and mixing (i) 35 grs. of a water-soluble urethane prepolymer ("OH-GROUT OH-1" manufactured by Toho Chemical Industry Co., Ltd.), (ii) 0.3 gr. of silicone as a bubble modifier ("SH193" manufactured by Toray Silicone Co., Ltd.), and (iii) 15 grs. of monofluorotrichlorometane ("FREON 11" manufactured by Daikin Co., Ltd.). When this mixture liquid was added to the water dispersion liquid under agitation, the resultant mixture dispersion liquid started foaming.

The mixture dispersion liquid under foaming was poured into a unglazed flowerpot of the size No. 5 and left at a temperature of 20°C for 10 minutes, causing the same to foam and cure.

Since the resultant artificial soil block for plant culture was integral with the flowerpot, the soil block did not fall from the flowerpot even though the flowerpot was turned sideways.

The resultant soil block contained 77 % by weight of soil and presented a bulk density of 0.32 g/cm³. This soil block was excellent in water retention, air permeability, resilience, shape retention and the like.

### Example 8

Dissolved in 10 kgs. of water at 50°C was 15 grs. of a surface active agent ("STARHOME DO" manufactured by Nippon Oil & Fats Co., Ltd.). Added to this liquid was 15 kgs. of compound soil containing (i) 12 kgs. of the soil of Example 1 passed through a 16-mesh sieve and (ii) 3 kgs. of calcined gypsum, thereby to prepare a water dispersion liquid. On the other hand, there was prepared a mixture liquid by uniformly agitating and mixing (i) 1 kg. of a water-soluble urethane prepolymer ("SANPLEIN WE-104" manufactured by Sanyo Chemical Industries Ltd.), (ii) 10 grs. of silicone as a bubble modifier ("SH193" manufactured by Toray Silicone Co., Ltd.), and (iii) 1.2 kg. of monofluorotrichlorometane ("FREON 11" manufactured by Daikin Co., Ltd.).

When this mixture liquid was added to the water dispersion liquid under agitation, the resultant mixture dispersion liquid started foaming.

The mixture dispersion liquid under foaming was poured into a mold frame of 5000 mm x 5000 mm x 300 mm and left at 20°C for 20 minutes, causing the mixture dispersion liquid to further foam. The resultant foamed body was then removed from the mold frame, thus producing an artificial soil block for plant culture.

This artificial soil block contained 75 % by weight of the compound soil, and presented a bulk density of 0.16 g/cm³ after dried at 90°C for two hours. This soil block was excellent in water retention, air permeability, resiliency, shape retention and the like.

### Example 9

Added to 140 grs. of water was 15 grs. of water-soluble urethane prepolymer ("OH-GROUT OH-1" manufactured by Toho Chemical Industry Co., Ltd.). The resultant mixture was uniformly agitated and mixed. Added to this mixture was 330 grs. of compound soil containing (i) 280 grs. of the soil of Example 1 passed through a 16-mesh sieve and (ii) 50 grs. of oil cake. While the resultant mixture was agitated and mixed, 15 grs. of monofluorotrichlorometane ("FREON 11" manufactured by Daikin Co., Ltd.) was added to prepare a mixture dispersion liquid. The resultant mixture dispersion liquid was poured into a flowerpot of the size No. 5, and allowed to foam and cure. The resultant foamed body was dried in the same manner as in Example 1.

The resultant artificial soil block for plant culture contained 96 % by weight of the compound soil and presented a bulk density of 0.35 g/cm³. This soil block was excellent in water retention, air permeability, resiliency, shape retention and the like.

### Example 10

Added to 520 grs. of water at 50°C were (i) 640 grs. of compound soil containing rice hulls, leaf mold and the like ("ENGEINOTOMO" manufactured by Katei Engeinotomo Co., Ltd.), (ii) 6 grs. of a water-absorptive polymer ("MIZUMOTI ITIBAN No.3" manufactured by The Nippon Synthetic Chemical Industry Co., Ltd.), (iii) 6 grs. of calcium chloride and (iv) 4 grs. of a surface active agent ("EMAL D-3-D" manufactured by Cao Co., Ltd.). This mixture was agitated and mixed to prepare a water dispersion liquid. On the other hand, there was prepared a mixture liquid by uniformly agitating and mixing (i) 60 grs. of a water-soluble urethane prepolymer ("OH-GROUT OH-1" manufactured by Toho Chemical Industry Co., Ltd.), (ii) 0.6 gr. of silicone as a bubble modifier ("SH193" manufactured by Toray Silicone Co., Ltd.) and (iii) 29 grs. of monofluorotrichlorometane ("ASAHI FLON 11" manufactured by Asahi Glass Co., Ltd.).

When this mixture liquid was added to the water dispersion liquid under agitation, the resultant mixture dispersion liquid started foaming.

This mixture dispersion liquid which started foaming, was poured into a mold frame of 250 mm x 250 mm x 35 mm. This liquid was then left at 20°C for 10 minutes, causing the same to be cured. The cured body was then removed from the mold, thus producing an artificial soil block for plant culture. After dried at 60°C for three hours, the artificial soil block presented a bulk density of 0.35 g/cm³. This soil block was not only abundant in nutritious substance because of the rice hulls and leaf mold contained therein, but also particularly excellent in water retention because of the absorptive polymer contained therein.

### Example 11

7.5 Kgs. of water was poured into a 30-liter vessel, in which dissolved was 50 grs. of a surface active agent ("EMAL D-3-D" manufactured by Cao Co., Ltd.). Added to this solution was 6170 grs. of compound soil containing (i) 3.5 kgs. of Masa soil, (ii) 1 kg. of sawdust, (iii) 70 grs. of finely crushed pieces of a polystyrene foamed body, (iv) 600 grs. of rice hulls and (v) 1 kg. of calcined gypsum. This mixture was strongly agitated as if swallowing air therein, thereby to prepare a water dispersion liquid. Added to this water dispersion liquid was 0.5 kg. of a water-soluble urethane prepolymer ("OH-GROUT OH-8B" manufactured by Toho Chemical Industry Co., Ltd., which is a composition obtained by mixing toluene diisocyanate and methyl ethyl ketone with a prepolymer of the organic isocyanate polyether triol type having m of 10 to 30 and n of 70 to 90 in the general formula (B)). The resultant mixture was agitated, after which normal pentane was added to the mixture. The resultant mixture was further agitated and mixed uniformly. This mixture liquid was poured into a mold frame of 75 mm x 600 mm x 600 mm and left at 20°C for 20 minutes, causing the mixture liquid to foam. The resultant foamed body was removed from the mold frame, thus producing an artificial soil block for plant culture.

This soil block was excellent in water retention, air permeability, resiliency, shape retention and the like. After dried at 90°C for 24 hours, this soil block presented a bulk density of 0.24 g/cm³.

### Example 12

Dissolved in 400 grs. of water was 3 grs. of a surface active agent ("EMAL D-3-D" manufactured by Cao Co., Ltd.). Added to the resultant solution was 205 grs. of compound soil containing (i) 75 grs. of diatomaceous silica (Kunimine Kogyo Co., Ltd.), (ii) 75 grs. of fly ash (manufactured by Kanden Chemical Engineering Inc.) and (iii) 55 grs. of Barkumin (manufactured by Sumitomo Ringyo Co., Ltd.). The resultant mixture was mixingly agitated to prepare a water dispersion liquid. On the other hand, there was prepared a mixture liquid by uniformly agitating and mixing (i) 40 grs. of a water-soluble urethane prepolymer ("SANPLEIN WE-104" manufactured by Sanyo Chemical Industries Ltd.), and (ii) 8 grs. of normal pentane. The mixture liquid was agitatingly mixed with the water dispersion liquid, thereby to produce a mixture dispersion liquid.

This mixture dispersion liquid was poured into a mold frame of 150 mm x 150 mm x 30 mm and left at a room temperature for 20 minutes, causing the liquid to foam. The foamed body was then removed from the mold frame, thus producing an artificial soil block for plant culture.

After dried at 90°C for two hours, the resultant soil block presented a bulk density of 0.31 g/cm³.

### Example 13

Added to 1160 grs. of water was 1160 grs. of compound soil containing (i) 750 grs of Masa soil, (ii) 300 grs. of calcined gypsum (under the tradename of "K" manufactured by Sanesu Gypsum Co., Ltd.) and (iii) 110 grs. of peat moss (manufactured by Gulf Island Peat Moss Co., Inc.). The resultant mixture was uniformly agitated and mixed to prepare a water dispersion liquid. Introduced into this water dispersion liquid was a hose connected to a liquefied carbonic acid gas bomb (manufactured by Mitsui Toatsu Liquid Carbnonic Inc.). Carbonic acid gas was fed to the water dispersion liquid while it was agitated and mixed. Further, 100 grs. of a water-soluble urethane prepolymer ("OH-GROUT OH-8B" manufactured by Toho Chemical Industry Co., Ltd.) was added to this water dispersion liquid. The resultant mixture was uniformly agitated and mixed.

The mixture dispersion liquid to which the carbonic acid gas had been dispersed, was poured into a mold frame of 300 mm x 300 mm x 30 mm. This liquid was left at 20°C for 10 minutes, causing the same to be cured. The resultant foamed body was then removed from the mold frame, thus producing an artificial soil block for plant culture.

After dried at 60°C for three hours, the resultant soil block presented a bulk density of 0.44 g/cm³.

### Example 14

There was prepared a water solution by dissolving, in 400 grs. of water, 3 grs. of a surface active agent ("EMAL D-3-D" manufactured by Cao Co., Ltd.). Added to this water solution was 260 grs. of compound soil containing rice hulls, leaf mold and the like ("ENGEINOTOMO" manufactured by Katei Engeinotomo Co., Ltd.). The resultant mixture was agitated and mixed to prepare a water dispersion liquid. Added to this water dispersion liquid were (i) 30 grs. of a water-soluble urethane prepolymer ("OH-GROUT OH-1" manufactured by Toho Chemical Industry Co., Ltd.) and (ii) 0.6 gr. of silicone as a bubble modifier. The resultant mixture was uniformly agitated. While air was fed to this mixture liquid from a compressor through a hose, the mixture liquid was further agitated and mixed to produce a mixture dispersion liquid.

This mixture dispersion liquid was poured into a mold frame of 250 mm x 250 mm x 35 mm. This liquid was left at 20°C for 10 minutes, causing the same to be cured. The resultant cured body was then removed from the mold frame, thus obtaining a soil block.

After dried at 60°C for three hours, the resultant soil block for plant culture presented a bulk density of 0.39 g/cm³.

### Example 15

Dissolved in 700 grs. of water was 14 grs. of a surface active agent ("EMAL D-3-D" manufactured by Cao Co., Ltd.). Added to the resultant water solution was 620 grs. of soil containing (i) 300 grs. of Masa soil, (ii) 300 grs. of calcined gypsum (under the tradename of "K" manufactured by Sanesu Gypsum Co., Ltd.) and (iii) 20 grs. of finely crushed pieces of a foamed polystyrene. The resultant mixture was agitated and mixed in a vessel by vertically moving the agitating blades for swallowing air as much as possible. Thus, a water dispersion liquid was prepared.

Added to this water dispersion liquid was 200 grs. of a water-soluble urethane prepolymer ("OH-GROUT OH-1" manufactured by Toho Chemical Industry Co., Ltd.). The resultant mixture was uniformly agitated and mixed to prepare a mixture dispersion liquid.

Then, the agitating blades were vertically moved in the vessel to agitate and mix this mixture dispersion liquid such that air was swallowed therein as much as possible. The resultant mixture dispersion liquid was then poured into a flowerpot of the size No. 5.

Seedings of Sinonome chrysanthemum were transported to and cultivated in this flowerpot. About two months, red flowers bloomed.

The artificial soil blocks for plant culture of Example 7 to Example 15 had a foamed body structure containing soils. Accordingly, they were not only excellent in water retention and air permeability, but also light in weight to facilitate the handling thereof. Further, they are excellent in plant supporting and holding properties.

These artificial soils were in a unitary structure as a block. Accordingly, when these artificial soils were used for indoor flowerpots, they did not fall from the flowerpots at the time of handling, thus preventing the floor or the like from being contaminated.

Further, when a plastic flowerpot was used, the flowerpot and the artificial soil were bonded togher, facilitating the transportation thereof.

Further, according to the size of a flowerpot to be used, the area and size of a culture ground and the like, a suitable number of the artificial soil blocks of a predetermined shape may be used by laying, or the artificial soil block may be suitably cut and patched. Thus, a culture ground may be easily prepared as desired. Further, this soil block may be easily cut out. It is therefore possible to set out plants or sow seeds in the cut-out portions of the block, without digging up the artificial soil. Seeds or the like may be held in the cut-out portions of the block, preventing the seeds from flowing out due to wind or the like.

Further, the artificial soil blocks having different concentrations of soils, different nourishments, different concentrations of fertilizers and the like may be used, in a desired manner, as combined suitably for the growth of plants to be cultivated. For example, the artificial soil block having a great concentration of nourishment may be disposed around the root of a plant.

After use, these soil blocks could be easily crushed to a state similar to natural soil, because of their great concentration of soils. Accordingly, the soil block for plant culture in accordance with the present invention is suitable as soil for agriculture and gardening soil.

### Example 16

Added to 1 kg. of water were (i) 250 grs. of Masa soil, (ii) 5 grs. of finely crushed pieces of a polystyrene foamed body, (iii) 40 grs. of paper waste and (iv) 45 grs. of peat moss (manufactured by Gulf Island Peat Moss Co., Inc.). The resultant mixture was uniformly mixed and agitated to prepare a water dispersion liquid.

Added to this water dispersion liquid under agitation was 100 grs. of a water-soluble urethane prepolymer ("OH-GROUT OH-1" manufactured by Toho Chemical Industry Co., Ltd.). The resultant mixture was continuously agitated to prepare a uniform mixture dispersion liquid.

This mixture dispersion liquid was then poured into a mold frame in the form of a dog having a volume of 560 cm³. Thus, a dog-shape soil block for plant culture was obtained.

After dried at 20°C for six hours, this soil block for plant culture was excellent in water retention, air permeability, resiliency, shape retention and the like. This soil block presented a bulk density of 0.39 g/cm³.

### Example 17

Added to 700 grs. of water were (i) 250 grs. of Masa soil, (ii) 15 grs. of pearlite ("FUYOLITE NO. 7" manufactured by Fuyolite Kogyo Co., Ltd.), (iii) 50 grs. of crushed pieces of used tires and (iv) 50 grs. of sawdust. The resultant mixture was uniformly agitated and mixed to prepare a water dispersion liquid.

Added to this water dispersion liquid under agitation was 60 grs. of a water-soluble urethane prepolymer ("OH-GROUT OH-8B" manufactured by Toho Chemical Industry Co., Ltd.). The resultant mixture was continuously agitated to prepare a uniform mixture dispersion liquid.

This mixture dispersion liquid was poured into a mold frame of 150 mm x 150 mm x 30 mm. Thus, an artificial soil block for plant culture was obtained.

The foamed body obtained after this block had been left at 20°C for 25 minutes, was removed from the mold frame. After dried at 80°C for three hours, this soil block for plant culture was excellent in water retention, air permeability, resiliency, shape retention and the like. This soil block presented a bulk density of 0.61 g/cm³.

According to the soil block for plant culture obtained by Example 16, the soil block is integral with the dog-shape mold frame. Accordingly, the soil block may be disposed as desired, for example as hanging upside down. Thus, this soil block is suitable for a decorative flowerpot.

In Example 16, when the mixture dispersion liquid is to be poured into the dog-shape mold frame, mold release paper may be disposed between the mixture dispersion liquid and the mold frame or a mold release material may be applied to the mold frame. In such a case, a dog-shape artificial soil block may be manufactured with the artificial soil only.

The soil blocks for plant culture obtained by Example 16 and Example 17 presented a small bulk density and a suitable viscoelasticity. Accordingly, such blocks were not only light in weight and easy to handle, but also excellent in plant supporting and holding properties. When the artificial soil block was used for an indoor flowerpot, it did not fall from the flowerpot at the time of handling, thus preventing the floor or the like from being contaminated.

Further, according to the size of a flowerpot to be used, the area and size of a culture ground and the like, a suitable number of the artificial soil blocks of a predetermined shape may be used as laying, or the artificial soil block may be suitably cut and patched. Thus, a culture ground may be easily prepared. Further, this soil block may be easily cut out. It is therefore possible to set out plants or sow seeds in the cut-out portions of the block, without digging up the artificial soil. Seeds or the like may be held in the cut-out portions of the block, preventing the seeds from flowing out due to rain or the like.

Further, the artificial soil blocks having different concentrations of soils, different nourishments, different concentrations of fertilizers and the like may be used, in a desired manner, as combined suitably for the growth of plants to be cultivated. For example, the artificial soil block having a great concentration of nourishment may be disposed around the root of a plant.

### Example 18

Dissolved in 480 grs. of water was 2 grs. of a surface active agent ("EMAL D-3-D" manufactured by Cao Co., Ltd.). Added to this water solution was 300 grs. of diatomaceous silica ("KUNILITE 401" manufactured by Kunimine Kogyo Co., Ltd.). The resultant mixture was agitated and mixed in a vessel with air swallowed therein, thereby to prepare a water dispersion liquid. Added to this water dispersion liquid was 33 grs. of a water-soluble urethane prepolymer ("OH-GROUT OH-1" manufactured by Toho Chemical Industry Co., Ltd.). The resultant mixture was uniformly agitated and mixed to prepare a dispersion liquid.

After the dispersion liquid was allowed to be cured for a while, the resultant cured body was crushed into pieces having suitable sizes. These crushed pieces were then loaded into a sugar coating machine, thus producing a porous artificial soil for plant culture in the form of a particle having a grain size of 2 to 17 mm. After dried at 70°C for four hours, the particles presented a bulk density of 0.51 g/cm³ when measured in the following manner. That is, the artificial soil was put in a vessel of a predetermined volume and the vessel was beaten three times with constant force. Measurement was then made with the vessel fully charged with the soil. In the following Example 19 to Example 29, the bulk density was measured in the same manner as above-mentioned.

### Example 19

Added to 850 grs. of water were (i) 60 grs. of peat moss (manufactured by Gulf Island Peat Moss Co., Inc.) and (ii) 0.9 gr. of slaked lime (manufactured Akasaka Kyoudou Sekkai Kakou Corporation). The resultant mixture was agitated and mixed in a vessel to prepare an aqueous dispersion liquid. Added to this liquid was 36 grs. of a water-soluble urethane prepolymer ("SANPLEIN WE-104" manufactured by Sanyo Chemical Industries Ltd.). The resultant mixture was uniformly agitated and mixed to prepare a dispersion liquid.

After this dispersion liquid was allowed to be cured for a while, the resultant cured body was crushed into pieces having suitable sizes, thus producing a porous artificial soil for plant culture in the form of a particle having a size from 1 to 15 mm. After dried 80°C for five hours, these crushed pieces presented a bulk density of 0.12 g/cm³ and PH of 6.6. The PH was measured in a manner outlined below. One part by weight of the artificial soil was impregnated with 10 parts by weight of water. After the resultant artificial soil had been left for one hour, its PH value was measured with the use of a PH meter (Model PH-8AE manufactured by Yanagimoto Seisakusho Co., Ltd.). In the following Examples, the PH values were measured in the same manner as above-mentioned).

### Example 20

7.5 Kgs. of water was put into a 30-liter vessel. Dissolved in this water was 50 grs. of a surface active agent ("EMAL D-3-D" manufactured by Cao Co., Ltd.). Added to the resultant solution was 6170 grs. of compound soil containing (i) 3.5 kgs. of Masa soil, (ii) 1 kg. of sawdust, (iii) 70 grs. of finely crushed pieces of a polystyrene foamed body, (iv) 600 grs. of rice hulls and (v) 1 kg. of calcined gypsum. The resultant mixture was agitated to prepare an aqueous dispersion liquid. Added to this aqueous dispersion liquid was 0.5 kg. of a water-soluble urethane prepolymer ("OH-GROUT OH-8B" manufactured by Toho Chemical Industry Co., Ltd.). The resultant mixture was agitated, after which 35 grs. of normal pentane was added. The resultant mixture was uniformly agitated and mixed to prepare a dispersion liquid.

After this dispersion liquid had been allowed to be cured, the resultant cured body was pelletized with the use of a pelleter (Model PU-5 manufactured by Fuji Paudal Co., Ltd.), thus producing a porous artificial soil for plant culture in the form of a pellet having a diameter of 2 mm and a length of 25 mm. After dried for 8 hours, these pellets presented a bulk density of 0.21 g/cm³ and PH of 6.3.

### Example 21

Added to 1160 grs. of water was 1160 grs. of compound soil containing (i) 750 grs. of Masa soil, (ii) 300 grs. of calcined gypsum (under the tradename of "K" manufactured by Sanesu Gypsum Co., Ltd.), and (iii) 110 grs. of peat moss (manufactured by Gulf Island Peat Moss Co., Inc.). The mixture was uniformly agitated and mixed to prepare an aqueous dispersion liquid. Introduced into this aqueous dispersion liquid was a hose connected to a liquefied carbonic acid gas bomb (manufactured by Mitsui Toatsu Liquid Carbnonic Inc.). Carbonic acid gas was fed to the aqueous dispersion liquid while the dispersion liquid was agitated and mixed. Further, 100 grs. of a water-soluble urethane prepolymer ("OH-GROUT OH-8B" manufactured by Toho Chemical Industry Co., Ltd.) was added to this aqueous dispersion liquid. The resultant mixture was uniformly agitated and mixed to prepare a dispersion liquid.

After this dispersion liquid was allowed to be cured for a while, the resultant cured body was pelletized with the use of a pelleter (Model PU-5 manufactured by Fuji Paudal Co., Ltd.), thus producing a porous artificial soil for plant culture in the form of a pellet each having a diameter of 7 mm and a length of 10 mm. After dried at 70 °C for three hours, these pellets presented a bulk density of 0.31 g/cm³ and PH of 6.5.

### Example 22

Dissolved in 350 grs. of water was 2 grs. of a surface active agent ("STARHOME DO" manufactured by Nippon Oil & Fats Co., Ltd.). Added to this water solution was 65 grs. of a water-soluble urethane prepolymer ("OH-GROUT OH-8" manufactured by Toho Chemical Industry Co., Ltd.). Thus, a water solution was prepared. Added to this water solution was a mixture containing (i) 90 grs. of compound soil containing rice hulls, leaf mold and the like ("ENGEINOTOMO" manufactured by Katei Engeinotomo Co., Ltd.), (ii) 180 grs. of Barkumin (Sumitomo Ringyo co., Ltd.), (iii) 140 grs. of calcined gypsum (under the tradename of "K" manufactured by Sanesu Gypsum Co., Ltd.), (iv) 3 grs. of a water-absorptive polymer ("MIZUMOTI ITIBAN No.3" manufactured by The Nippon Synthetic Chemical Industry Co., Ltd.), (v) 10 grs. of ammonium sulfate, (vi) 5 grs. of ammonium phosphate, and (vii) 5 grs. of vulcanization. The resultant mixture was uniformly agitated and mixed. While air was fed to this mixture from a compressor through a hose, the mixture was agitated and mixed to prepare a dispersion liquid.

After this dispersion liquid had been allowed to be cured for a while, the resultant cured body was cut into a noodle shape with the use of a noodle making machine (Model" LUSSO MOD 150" manufactured by AMPIA Co., Ltd.). There was thus produced a porous artificial soil for plant culture in the form of noodle having a diameter of 2 mm and a length from 2 to 300 mm.

After dried at 70°C for three hours, the noodle-like soil presented a bulk density of 0.41 g/cm³.

### Example 23

Added to 420 grs. of water were (i) 10 grs. of bone material ("FUYOLITE NO. 1" manufactured by Fuyolite Kogyo Co., Ltd.), (ii) 120 grs. of diatomaceous silica ("KUNILITE 401" manufactured by Kunimine Kogyo Co., Ltd.) and (iii) 20 grs. of finely crushed pieces of foamed polystyrene (manufactured by Sekisui Kaseihin Kogyo Kabushiki Kaisha). The resultant mixture was agitated and mixed in a vessel to prepare an aqueous dispersin liquid. Added to this dispersion liquid was 60 grs. of a water-soluble urethane prepolymer ("OH-GROUT OH-1" manufactured by Toho Chemical Industry Co., Ltd.). The resultant mixture was uniformly agitated and mixed to prepare a dispersion liquid.

After this dispersion liquid had been allowed to be cured for a while, the resultant cured body was crushed into pieces having suitable sizes. These pieces were loaded into a sugar coating machine, thus producing a porous artificial soil for plant culture in the form of a particle having a grain size from 2 to 15 mm.

After dried at 70°C for four hours, the particles presented a bulk density of 0.29 g/cm³.

### Example 24

Dissolved in 290 grs. of water was 3 grs. of a surface active agent ("EMAL D-3-D" manufactured by Cao Co., Ltd.). Added to this water solution was 400 grs. of calcined gypsum (under the tradename of "K" manufactured by Sanesu Gypsum Co., Ltd.). The resultant mixture was agitated and mixed in a vessel with air swallowed therein, thus preparing an aqueous dispersion liquid. Added to this dispersion liquid was 10 grs. of a water-soluble urethane prepolymer ("OH-GROUT OH-1" manufactured by Toho Chemical Industry Co., Ltd.). The resultant mixture was further agitated and mixed with air swallowed therein, thus preparing a dispersion liquid.

The dispersion liquid was allowed to be cured for a while until the liquid became suitably viscous. This viscous body was crushed into pieces having suitable sizes, which were then loaded into a sugar coating machine. There was thus produced a porous artificial soil for plant culture in the form of a particle having a grain size of 2 to 17 mm. After dried at 50°C for 9 hours, these particles presented a bulk density of 0.17 g/cm³.

### Example 25

Dissolved in 1 kg. of water were (i) 6 grs. of a surface active agent ("EMAL D-3-D" manufactured by Cao Co., Ltd.) and (ii) 20 grs. of polyvinyl alcohol ("A-300" manufactured by The Nippon Synthetic Chemical Industry Co., Ltd.). Added to this water solution were (i) 70 grs. of peat moss (manufactured by Gulf Island Peat Moss Co., Inc.) and (ii) 1 gr. of slaked lime (manufactured by Akasaka Kyoudou Sekkai Kakou Corporation). The resultant mixture was agitated and mixed in a vessel with air swallowed therein. Thus, an aqueous dispersion liquid was prepared. Added to this dispersion liquid was 30 grs. of a water-soluble urethane prepolymer ("SANPLEIN WE-104" manufactured by Sanyo Chemical Industries Ltd.). The resultant mixture was further agitated and mixed with air swallowed therein, thus preparing a dispersion liquid.

After this dispersion liquid had been left and allowed to be cured for a while, the resultant cured body was pelletized with the use of a pelleter (Model PU-5 manufactured by Fuji Paudal Co., Ltd.). Thus, there was produced a porous artificial soil for plant culture in the form of a pellet having a diameter of 5 mm and a length of 6 mm. After dried at 80°C for 5 hours, these pellets presented a bulk density of 0.08 g/cm³ and PH of 6.7.

### Example 26

Dissolved in 5500 grs. of water at 50°C was 30 grs. of a surface active agent ("STANHOME DO" manufactured by Nippon Oil & Fats Co., Ltd.). Added to this water solution were (i) 842 grs. of diatomaceous silica ("KUNILITE 401" manufactured by Kunimine Kogyo Co., Ltd.) and (ii) 1500 grs. of calcined gypsum (under the tradename of "K" manufactured by Sanesu Gypsum Co., Ltd.). The resultant mixture was agitated and mixed in a vessel, thus preparing an aqueous dispersion liquid.

Added to this aqueous dispersion liquid was 350 grs. of a water-soluble urethane prepolymer ("OH-GROUT OH-1" manufactured by Toho Chemical Industry Co., Ltd.). The resultant mixture was agitated. Added to this mixture was 105 grs. of monofluorotrichlorometane ("ASAHI FRON 11" manufactured by Asahi Glass Co., Ltd.). When the resultant mixture was uniformly agitated and mixed, the mixture started foaming.

After this dispersion liquid was left and allowed to be cured for a while, the resultant cured body was crushed into pieces having suitable sizes. These pieces were loaded in a sugar coating machine, thus producing a porous artificial soil for plant culture in the form of a particle having a grain size of 2 to 17 mm. After dried at 70°C for four hours, these particles presented a bulk density of 0.15 g/cm³.

### Example 27

Dissolved in 510 grs. of water at 60°C was 3 grs. of a surface active agent ("EMAL D-3-D" manufactured by Cao Co., Ltd.). Added to this solution were (i) 58 grs. of peat moss (manufactured by Gulf Island Peat Moss Co., Inc.) and (ii) 200 grs. of calcined gypsum (under the tradename of "K" manufactured by Sanesu Gypsum Co., Ltd.). The resultant mixture was agitated and mixed in a vessel, thus preparing an aqueous dispersion liquid.

Added to this aqueous dispersion liquid was 27 grs. of a water-soluble urethane prepolymer ("OH-GROUT OH-1" manufactured by Toho Chemical Industry Co., Ltd.). The resultant mixture was agitated, after which 20 grs. of normal pentan was added. When the resultant mixture was uniformly agitated and mixed, it started foaming.

After this dispersion liquid was left and allowed to be cured for a while, the resultant cured body was crushed into pieces having suitable pieces. These pieces were loaded into a marumerizer (Model "Q-23" manufactured by Fuji Paudal Co., Ltd.). There was thus produced a porous artificial soil for plant culture in the form of a particle having a grain size of 2 to 17 mm. After dried at 70°C for four hours, the particles presented a bulk density of 0.19 g/cm³.

### Example 28

Dissolved in 480 grs. of water at 50°C was 5 grs. of a surface active agent ("EMAL D-3-D" manufactured by Cao Co., Ltd.). Added to this solution were (i) 380 grs. of compound soil containing rice hulls, leaf mold and the like ("ENGEINOTOMO" manufactured by Katei Engeinotomo Co., Ltd.) and (ii) 180 grs. of Barkumin (manufactured by Sumitomo Ringyo Co., Ltd.). The resultant mixture was agitated and mixed in a vessel with air swallowed therein, thus preparing an aqueous dispersion liquid.

Added to this aqueous dispersion liquid was 150 grs. of a water-soluble urethane prepolymer ("OH-GROUT OH-8B" manufactured by Toho Chemical Industry Co., Ltd.). The resultant liquid was agitated, after which added was 28 grs. of monofluorotrichlorometane ("ASAHI FLON 11" manufactured by Asahi Glass Co., Ltd.). The resultant liquid was agitated. When the liquid was uniformly agitated and mixed, it started foaming.

The dispersion liquid was poured into a palette and allowed to be cured for a while. Thus, a water-containing foamed body in the form of a thin layer was produced. This foamed body was formed with the use of a a noodle making machine (Model" LUSSO MOD 150" manufactured by AMPIA Co., Ltd.). There was thus produced a porous artificial soil for plant culture in the form of a band having a width of 7 mm, a thickness of 2 mm and a length of 2 to 300 mm.

After dried at 70°C for four hours, the band-like soil presented a bulk density of 0.35 g/cm³.

### Example 29

Added to 950 grs. of water were (i) 70 grs. of peat moss (manufactured by Gulf Island Peat Moss Co., Inc.), (ii) 10 grs. of a bone material ("FUYOLITE NO. 1" manufactured by Fuyolite Kogyo Co., Ltd.) and (iii) 1 gr. of slaked lime (manufactured by Akasaka Kyoudou Sekkai Kakou Corporation.). This mixture was agitated and mixed in a vessel to prepare an aqueous dispersion liquid. Added to this mixture was 40 grs. of a water-soluble urethane prepolymer ("SANPLEIN WE-104" manufactured by Sanyo Chemical Industries Ltd.). The resultant mixture was uniformly agitated and mixed to prepare a dispersion liquid.

After this dispersion liquid was left and allowed to be cured for a while, the resultant cured body was crushed into pieces having suitable sizes of 1 to 15 mm, thus producing a porous artificial soil for plant culture. After dried at 80°C for five hours, the crushed pieces presented a bulk density of 0.18 g/cm³ and PH of 6.4.

The artificial soils obtained by Example 18 to Example 29 were excellent in water retention, water permeability and air permeability. Further, they were not only light in weight and easy to handle, but also excellent in plant supporting and holding properties.

The artificial soils of Examples 18, 19, 23, 24, 26, 27 and 29 are in the form of a particle, while the artificial soils of Examples 20, 21 and 25 are in the form of a pellet. Accordingly, these artificial soils could be used for a variety of plant culture vessels in the same manner as in natural soils.

The artificial soils of Examples 22 and 28 are in the form of noodles. These soils could be used for a variety of plant culture vessels. Further, it was possible to intertwine a number of noodle bodies into the form of a mass. Such a mass could be used for plant culture as put in a basket or the like, without use of a culture vessel.

### Example 30

Dissolved in 650 grs. of water at 60°C was 2 grs. of a surface active agent ("EMAL D-3-D" manufactured by Cao Co., Ltd.). Added to this water solution were (i) 50 grs. of peat moss (manufactured by Gulf Island Peat Moss Co., Inc.), (ii) 125 grs. of gypsum (under the tradename of "K" manufactured by Sanesu Gypsum Co., Ltd.), and (iii) 50 grs. of diatomaceous silica ("KUNILITE 401" manufactured by Kunimine Kogyo Co., Ltd.). The resultant mixture was agitated and mixed in a vessel to prepare a water dispersion liquid. Added to this water dispersion liquid was 25 grs. of a water-soluble urethane prepolymer ("OH-GROUT OH-1" manufactured by Toho Chemical Industry Co., Ltd.). The resultant mixture liquid was uniformly agitated and mixed. 8 Grs. of n-pentane was further added to this mixture liquid. When the resultant mixture liquid was uniformly agitated and mixed, this liquid started foaming.

This mixture liquid under foaming was poured into a rectangular parallelepied mold of 250 mm x 250 mm x 25 mm, causing the liquid to be cured. Thus, an artificial soil block was produced. This block was removed from the mold. After the block had been dried at 80°C for three hours in a drier, the block presented a bulk density of 0.16 g/cm³. The block also presented a maximum water holding capacity of 740 grs/l and a gas phase of 17% at the maximum water holding capacity.

With the use of TENSILON UTM-1 (manufactured by Orientec Co., Ltd.), the artificial soil was pierced with a rod-like member having a diameter of 1 mm, at a speed of 10 mm/min. The piercing strength was measured as 28 grs./mm².

Rice plants, tomatoes, cucumbers, fringed pinks, pansies and the like were cultivated with culture grounds of this artificial soil, and checked for decay of their roots. These plants presented no root decay since the gas phase was in a range from 5 to 25% which is preferable for plants.

### Example 31

Dissolved in 530 grs. of water at 60°C was 2 grs. of a surface active agent ("EMAL D-3-D" manufactured by Cao Co., Ltd.). Added to this water solution were (i) 25 grs. of peat moss (manufactured by Gulf Island Peat Moss Co., Inc.), 150 grs. of gypsum (under the tradename of "K" manufactured by Sanesu Gypsum Co., Ltd.), and (iii) 50 grs. of diatomaceous silica ("KUNILITE 401" manufactured by Kunimine Kogyo Co., Ltd.). The resultant mixture was agitated and mixed in a vessel to prepare a water dispersion liquid.

Added to this water dispersion liquid was 25 grs. of a water-soluble urethane prepolymer ("OH-GROUT OH-1" manufactured by Toho Chemical Industry Co., Ltd.). The resultant liquid was uniformly agitated and mixed. Further, 12 grs. of n-pentane was added. When the resultant mixture liquid was uniformly agitated and mixed, the n-pentane was evaporated, causing the liquid to start foaming.

Then, the same procedures as in Example 30 were applied to prepare an artificial soil in the form of a block. After dried under the same conditions as in Example 30, the artificial soil presented a bulk density of 0.15 g/cm³, a maximum water holding capacity of 840 g/l and a gas phase at the maximum waer holding capacity of 9%.

Rice plants, tomatoes, cucumbers, fringed pinks, pansies and the like were cultivated with culture grounds of this artificial soil, and then checked for decay of their roots. These plants presented no root decay since the gas phase was in a range from 5 to 25% which is preferable for plants.

### Comparative Example 1

Dissolved in 155 grs. of water at 60°C was 2 grs. of a surface active agent ("EMAL D-3-D" manufactured by Cao Co., Ltd.). Added to this water solution was 225 grs. of gypsum (under the tradename of "K" manufactured by Sanesu Gypsum Co., Ltd.). The resultant mixture was agitated and mixed in a vessel to prepare a water dispersion liquid. Added to this water dispersion liquid was 25 grs. of a water-soluble urethane prepolymer ("OH-GROUT OH-1" manufactured by Toho Chemical Industry Co., Ltd.). The resultant mixture liquid was uniformly agitated and mixed. Further, 16 grs. of n-pentane was added. When the resultant mixture liquid was uniformly agitated and mixed, the liquid started foaming.

Then, the same procedures as in Example 30 were applied to this liquid, thereby to prepare an artificial soil in the form of a block. After dried under the same conditions as in Example 30, the artificial soil presented a bulk density of 0.15 g/cm³, a maximum water holding capacity of 920 g/l and a gas phase of 1% at the maximum water holding capacity.

Rice plants, tomatoes, cucumbers, fringed pinks, pansies and the like were cultivated with culture grounds of this artificial soil, and then checked for decay of their roots. These plants presented root decay since the gas phase rate was too small.

From Example 30, Example 31 and Comparative Example 1, it is found that the gas phase rate in the artificial soil is increased as the proportional ratio of the organic matter to the inorganic matter is increased.

### Comparative Example 2

Dissolved in 565 grs. of water at 60°C was 2 grs. of a surface active agent ("EMAL D-3-D" manufactured by Cao Co., Ltd.). Added to this water solution were (i) 28 grs. of peat moss (manufactured by Gulf Island Peat Moss Co., Inc.), (ii) 69 grs. of gypsum (under the tradename of "K" manufactured by Sanesu Gypsum Co., Ltd.) and (iii) 28 grs. of diatomaceous silica ("KUNILITE 401" manufactured by Kunimine Kogyo Co., Ltd.). The resultant mixture was agitated and mixed in a vessel to prepare a water dispersion liquid. Added to this water dispersion liquid was 125 grs. of a water-soluble urethane prepolymer ("OH-GROUT OH-1" manufactured by Toho Chemical Industry Co., Ltd.). The resultant mixture liquid was uniformly agitated and mixed. Further, 5 grs. of n-pentane was added. When the resultant mixture liquid was uniformly agitated and mixed, the n-pentane was evaporated, causing the liquid to start foaming.

Then, the same procedures as in Example 30 were applied to this liquid, thereby to prepare an artificial soil in the form of a block. After dried under the same conditions as in Example 30, the artificial soil presented a bulk density of 0.15 g/cm³. Further, a measurement of piercing strength was carried out on this artificial soil block in the same manner as in Example 30. This soil block presented a piercing strength of 274 g/cm².

In the artificial soil of Comparative Example 2, the piercing strength was extremely high as compared with that of Example 30. This shows that the use of an excessive amount of a water-soluble urethane prepolymer increases the root spreading resistance to prevent the plant root from growing.

## Claims

1. A porous artificial soil for plant culture comprising a first, substantially continuous matrix of solid material and a second, substantially continuous matrix of inter-communicating voids (24) distributed throughout the first matrix, the first matrix consisting of dispersed organic and/or inorganic matter (11), as a structural component, in an amount of at least 70% by weight, together with a hydrophilic polyurethane polymer, characterised in that the polymer is in the form of individual polymer pieces (23), as a binding component, the polymer pieces (23) being dispersed throughout the first matrix, the porous artificial soil containing the said structural component in an amount from 70 to 99% by weight.

2. A porous artificial soil as claimed in claim 1, in which the said matter (11) comprises soil.

3. A porous artificial soil for plant culture as claimed in claim 1 or 2, in which the polyurethane polymer is the polymerisation product of a chemical compound expressed by the following general formula (A), and/or a chemical compound expressed by the following general formula (B): 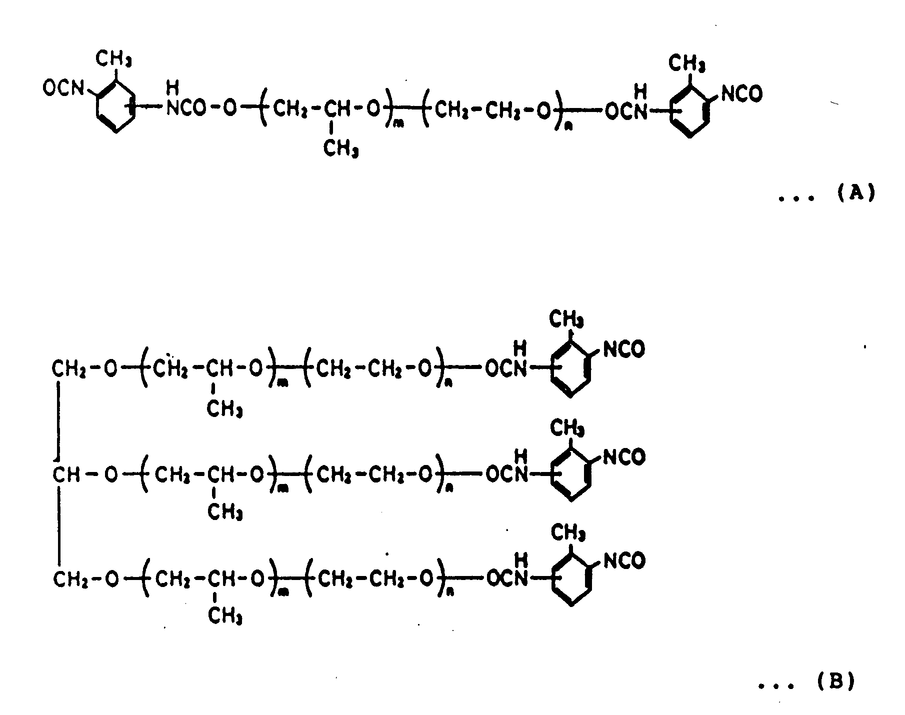 in both general formulas (A) and (B), m being an integer from 5 to 50 and n being an integer from 50 to 150.

4. A porous artificial soil for plant culture as claimed in any of claims 1 to 3, including gypsum as inorganic matter in an amount of 15% by weight or more, but less than 70% by weight.

5. A porous artificial soil as claimed in any of claims 1 to 4, characterized by containing a water-absorptive polymer.

6. A porous artificial soil as claimed in any of claims 1 to 5, characterized by containing fertilizer.

7. A porous artificial soil as claimed in any of claims 1 to 6, having a bulk density of from 0.05 to 1.0 g/cm³.

8. A method of manufacturing a porous artificial soil according to claim 1, the method comprising: introducing organic and/or inorganic matter into an aqueous dispersive medium; introducing at least one water-soluble urethane prepolymer into the aqueous dispersive medium; introducing gas into the aqueous dispersive medium, in a gaseous or liquid state; agitating the aqueous dispersive medium so that the organic and/or inorganic matter and the prepolymer are mixed therewith and so that bubbles of the gas are distributed throughout the mixture; and hardening the prepolymer while the bubbles remain distributed throughout the mixture, thereby forming dispersed polymer pieces as a binding component binding the dispersed organic and/or inorganic matter together as a structural component making up 70 to 99% by weight of the porous artificial soil .

9. A method as claimed in claim 8, including adding the organic and/or inorganic matter to the aqueous dispersive medium and agitating the mixture, subsequently adding the prepolymer to the mixture and agitating it, and forcibly introducing the gas into the aqueous dispersive medium at a suitable stage of this mixing sequence.

10. A method as claimed in claim 8 or 9, in which the water-soluble urethane prepolymer is a chemical compound expressed by the following general formula (A), and/or a chemical compound expressed by the following general formula (B): 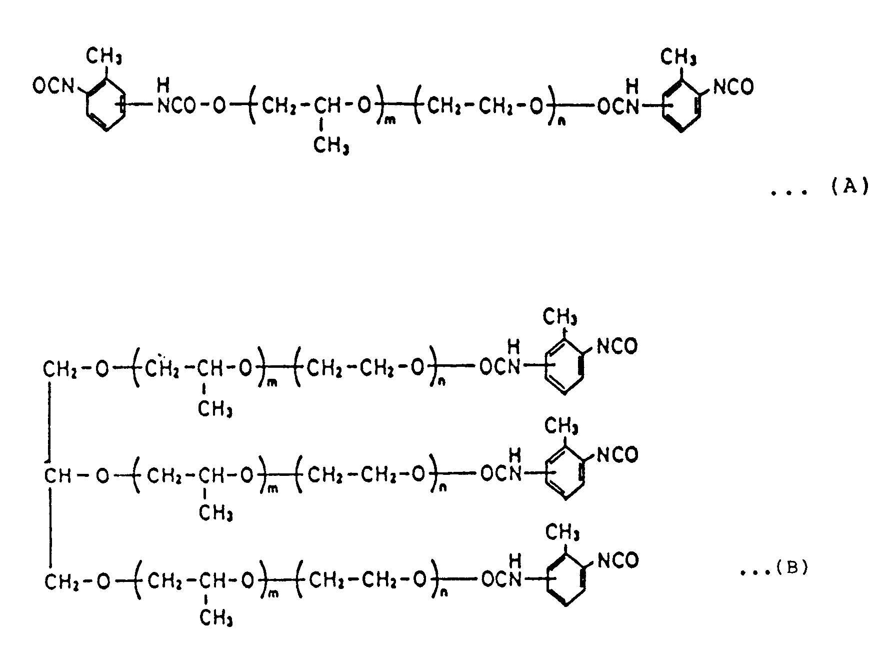 in both general formulas (A) and (B), m being an integer from 5 to 50 and n being an integer from 50 to 150.

11. A method as claimed in any of claims 8 to 10, in which 200 to 6000 parts by weight of the aqueous dispersive medium is used for 100 parts by weight of the water-soluble urethane prepolymer.

12. A method as claimed in any of claims 8 to 11, in which the aqueous dispersive medium contains a surface active agent.

13. A method as claimed in any of claims 8 to 12, in which a thickening agent is added to the aqueous dispersive medium.

## Patentansprüche

1. Poröse künstliche Erde für die Pflanzenkultur mit einer ersten, im wesentlichen kontinuierlichen Matrix eines festen Materials und einer zweiten, im wesentlichen kontinuierlichen Matrix von untereinander in Verbindung stehenden Hohlräumen (24), die überall in der ersten Matrix verteilt sind, wobei die erste Matrix aus dispergierter organischer und/oder anorganischer Substanz (11) als struktureller Komponente in einer Menge von wenigstens 70 Gew.-% in Verbindung mit einem hydrophilen Polyurethanpolymer besteht, gekennzeichnet dadurch, daß das Polymer die Form einzelner Polymerstücke (23) als verbindende Komponente hat, wobei die Polymerstücke (23) überall in der ersten Matrix dispergiert sind, wobei die poröse künstliche Erde die strukturelle Komponente in einer Menge zwischen 70 und 99 Gew.-% enthält.

2. Poröse künstliche Erde nach Anspruch 1 worin die Substanz (11) Erde aufweist.

3. Poröse künstliche Erde für die Pflanzenkultur nach Anspruch 1 oder 2, worin das Polyurethanpolymer das Polymerisationsprodukt einer chemischen Verbindung ist, welche durch die folgende allgemeine Formel (A) ausgedrückt wird, und/oder einer chemischen Verbindung, die durch die folgende allgemeine Formel (B) ausgedrückt wird: 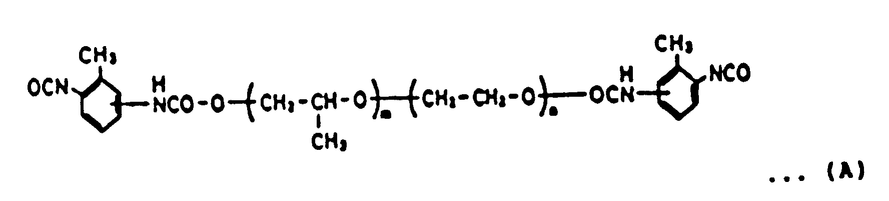 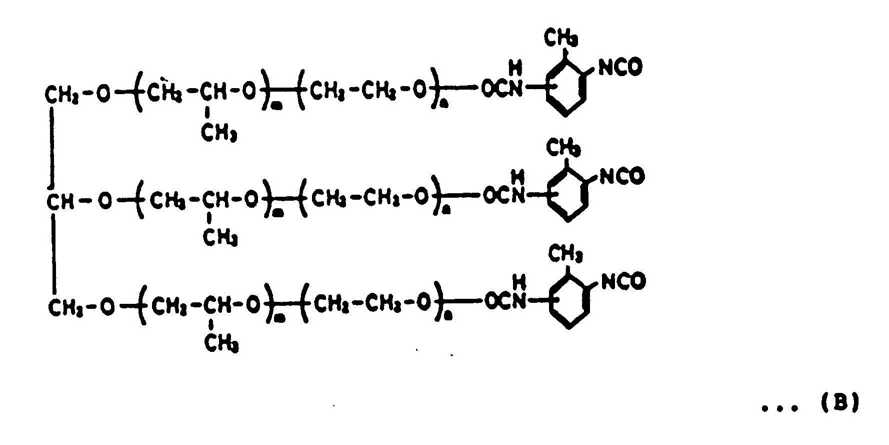 wobei in beiden allgemeinen Formeln (A) und (B) m eine ganze Zahl zwischen 5 und 50 und n eine ganze Zahl zwischen 50 und 150 ist.

4. Poröse künstliche Erde für die Pflanzenkultur nach einem der Ansprüche 1 bis 3, welche Gips als anorganische Substanz in einer Menge von 15 Gew.-% oder mehr, aber von weniger als 70 Gew.-% enthält.

5. Poröse künstliche Erde nach einem der Ansprüche 1 bis 4, gekennzeichnet dadurch, daß sie ein wasserabsorbierendes Polymer enthält.

6. Poröse künstliche Erde nach einem der Ansprüche 1 bis 5, gekennzeichnet dadurch, daß sie ein Düngemittel enthält.

7. Poröse künstliche Erde nach einem der Ansprüche 1 bis 6, mit einer Rohdichte von 0,05 bis 1,0 g/cm³ hat.

8. Methode zur Herstellung einer porösen künstlichen Erde nach Anspruch 1, welche aufweist: die Einführung einer organischen und/oder anorganischen Substanz in ein wässriges Dispersionsmittel; die Einführung wenigstens eines wasserlöslichen Urethanvorpolymers in das wässrige Dispersionsmittel; die Einführung von Gas im gasförmigen oder flüssigen Zustand in das wässrige Dispersionsmittel; das Rühren des wässrigen Dispersionsmittels, so daß die organische und/oder anorganische Substanz und das Vorpolymer mit diesem gemischt werden und Blasen des Gases überall im Gemisch verteilt werden; und das Härten des Vorpolymers, während die Blasen überall im Gemisch verteilt bleiben, wodurch dispergierte Polymerstücke als bindende Komponente gebildet werden, welche die dispergierte organische und/oder anorganische Substanz als strukturelle Komponente, die 70 bis zu 99 Gew.-% der porösen künstlichen Erde ausmacht, verbinden.

9. Methode nach Anspruch 8, wobei die organische und/oder anorganische Substanz dem wässrigen Dispersionsmittel zugesetzt und das Gemisch gerührt wird, anschließend das Vorpolymer dem Gemisch zugesetzt und dieses gerührt wird und das Gas in einer geeigneten Phase dieser Mischfolge forciert in das wässrige Dispersionsmittel eingeführt wird.

10. Methode nach einem der Einsprüche 8 oder 9, worin das wasserlösliche Urethanvorpolymer eine chemische Verbindung ist, welche durch die folgende allgemeine Formel (A) ausgedrückt wird, und/oder eine chemische Verbindung, welche durch die folgende allgemeine Formel (B) ausgedrückt wird: 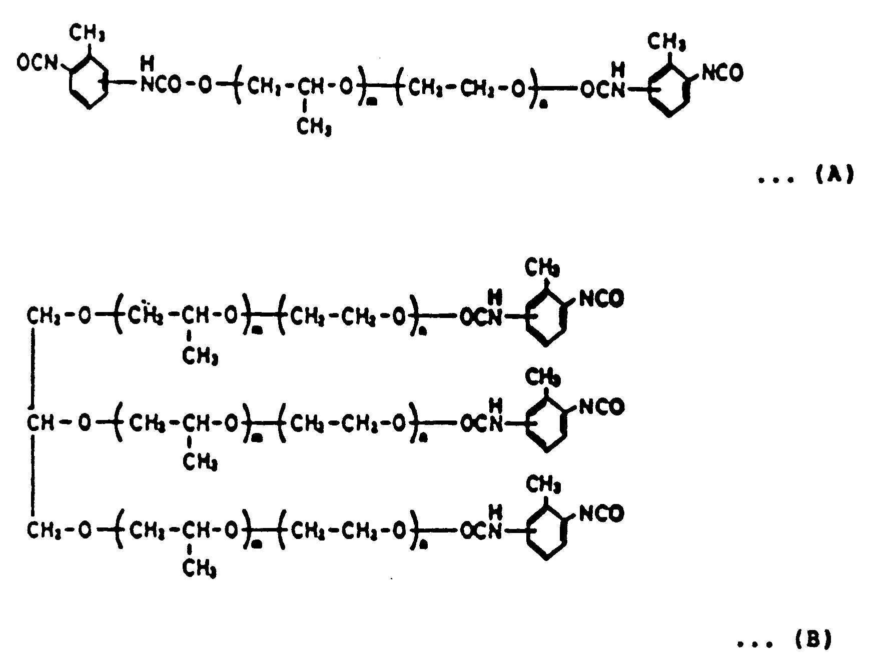 wobei in beiden allgemeinen Formeln (A) und (B) m eine ganze Zahl zwischen 5 und 50 und n eine ganze Zahl zwischen 50 und 150 ist.

11. Methode nach einem der Ansprüche 8 bis 10, worin 200 bis 6000 Gewichtsteile des wässrigen Dispersionsmittels für 100 Gewichtsteile des wasserlöslichen Urethanvorpolymers eingesetzt werden.

12. Methode nach einem der Ansprüche 8 bis 11, worin das wässrige Dispersionsmittel eine oberflächenaktive Substanz enthält.

13. Methode nach einem der Ansprüche 8 bis 12, worin dem wässrigen Dispersionsmittel ein Eindicker zugesetzt wird.

## Revendications

1. Un terreau poreux artificiel pour la culture de plantes, comprenant une première matrice pratiquement continue de matériau solide et une deuxième matrice pratiquement continue de vides à intercommunication (24), répartis dans la première matrice, la première matrice étant composée de matière organique et/ou inorganique dispersée (11), comme composant structurel, dans une quantité représentant au moins 70% en poids, ensemble avec un polymère de polyuréthane hydrophile, caractérisé en ce que le polymère a la forme de fragments polymères individuels (23), comme composant de liaison, les fragments polymères (23) étant dispersés dans la première matrice, le terreau poreux artificiel contenant ledit composant structurel dans une quantité représentant 70 à 90% en poids.

2. Un terreau poreux artificiel selon la revendication 1, dans lequel ladite matière (11) comprend de la terre.

3. Un terreau poreux artificiel pour la culture de plantes selon les revendications 1 ou 2, dans lequel le polymère de polyuréthane est le produit de polymérisation d'un composé chimique exprimé par la formule générale ci-dessous (A), et/ou un composé chimique exprimé par la formule générale ci-dessous (B): 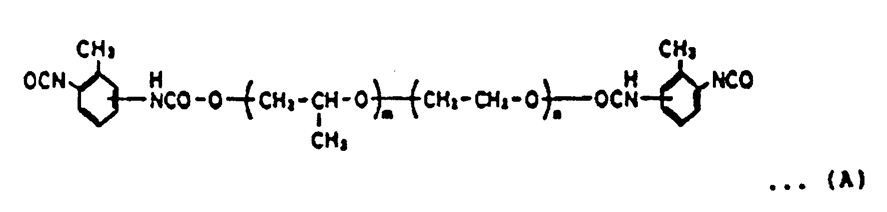 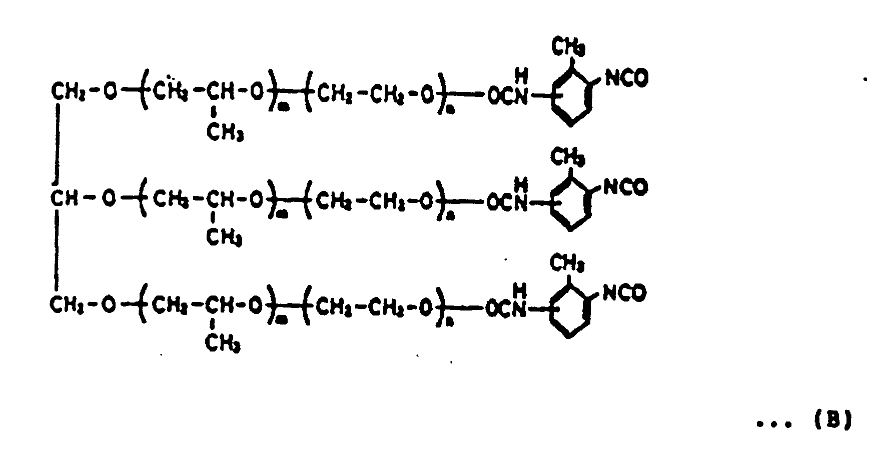 m étant un chiffre entier compris entre 5 et 50 et n étant un chiffre entier compris entre 50 et 150 dans les deux formules générales (A) et (B).

4. Un terreau poreux artificiel pour la culture de plantes selon l'une quelconque des revendications 1 à 3, englobant du gypse comme matière inorganique, dans une quantité représentant 15% en poids ou plus, mais moins de 70% en poids.

5. Un terreau poreux artificiel selon l'une quelconque des revendications 1 à 4, caractérisé en ce qu'il contient un polymère à absorption d'eau.

6. Un terreau poreux artificiel selon l'une quelconque des revendications 1 à 5, caractérisé en ce qu'il contient de l'engrais.

7. Un terreau poreux artificiel selon l'une quelconque des revendications 1 à 6, ayant une densité apparente comprise entre 0,05 et 1,0 g/cm³.

8. Un procédé de production d'un terreau poreux artificiel selon la revendication 1, le procédé comprenant les étapes suivantes: introduction d'une matière organique et/ou inorganique dans un agent aqueux de dispersion; introduction d'au moins un prépolymère d'uréthane soluble dans l'eau dans l'agent aqueux de dispersion; introduction de gaz dans l'agent aqueux de dispersion, dans un état gazeux ou liquide; brassage de l'agent aqueux de dispersion, de sorte à entraîner le mélange avec la matière organique et/ou inorganique et le prépolymère et la dispersion de bulles de gaz dans le mélange; et durcissement du prépolymère, les bulles étant toujours réparties dans le mélange, pour former ainsi des fragments polymères dispersés comme composant de liaison, assurant la liaison de la matière organique et/ou inorganique dispersée comme composant structurel, représentant de 70 à 99% en poids du terreau poreux artificiel.

9. Un procédé selon la revendication 8, englobant l'addition de la matière organique et/ou inorganique à l'agent aqueux de dispersion et le brassage du mélange, l'addition ultérieure du prépolymère au mélange et son brassage ainsi que l'introduction forcée de gaz dans l'agent aqueux de dispersion lors d'une étape appropriée de cette séquence de mélange.

10. Un procédé selon les revendications 8 ou 9, dans lequel le prépolymère d'uréthane soluble dans l'eau est un composé chimique exprimé par la formule générale ci-dessous (A), et/ou un composé chimique exprimé par la formule générale ci-dessous (B): 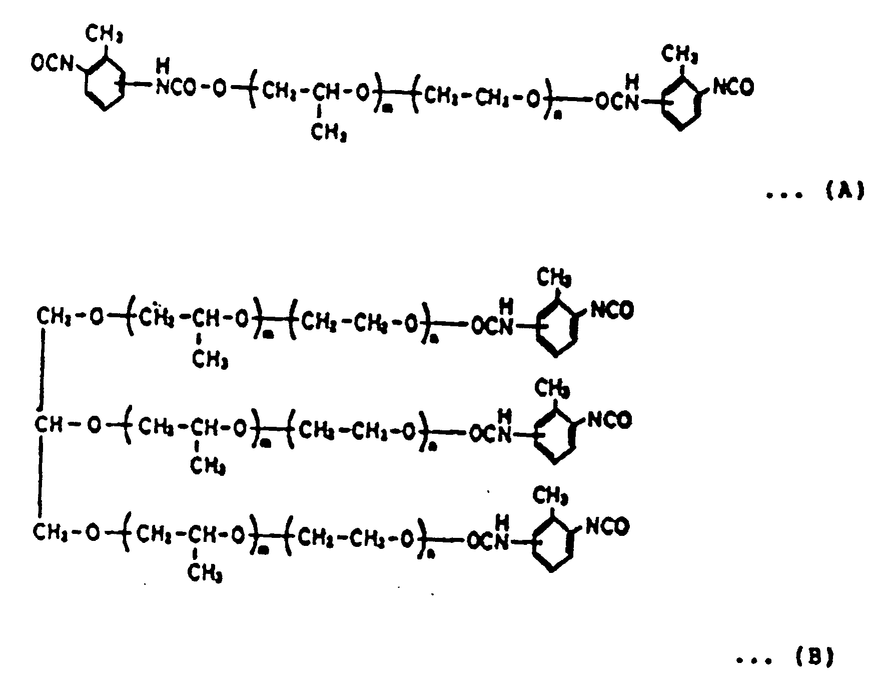 m étant un nombre entier compris entre 5 et 50 et n étant un nombre entier compris entre 50 et 150 dans les deux formules générales (A) et (B).

11. Un procédé selon l'une quelconque des revendications 8 à 10, dans lequel 200 à 6000 parties en poids de l'agent aqueux de dispersion sont utilisées pour 100 parties en poids du prépolymère d'uréthane soluble dans l'eau.

12. Un procédé selon l'une quelconque des revendications 8 à 11, dans lequel l'agent de dispersion aqueux contient un agent tensio-actif.

13. Un procédé selon l'une quelconque des revendications 8 à 12, dans lequel un agent d'épaississement est ajouté à l'agent aqueux de dispersion.
